# EUROPEAN PATENT SPECIFICATION

(11) **EP 1 952 559 B1**
(45) Date of publication and mention of the grant of the patent: **01.06.2016**
(21) Application number: 06812628.3
(22) Date of filing: 16.11.2006
(51) Int. Cl.: H04B 7/26, H04W 36/06, H04W 28/04, H04W 36/00

(54) **METHOD FOR SWITCHING AND MANAGING FREQUENCY ACCESS IN COGNITIVE RADIO SYSTEM, BASE STATION AND SUBSCRIBER STATION USING THE SAME**
VERFAHREN ZUM UMSCHALTEN UND VERWALTEN DES FREQUENZZUGANGS IN EINEM KOGNITIVEN FUNKSYSTEM, BASISSTATION UND TEILNEHMERSTATION DAMIT
METHODE POUR COMMUTER ET POUR GERER UN ACCES AUX FREQUENCES DANS UN SYSTEME DE RADIO COGNITIVE, STATION DE BASE ET STATION D'ABONNES FAISANT APPEL A CETTE METHODE

(30) Priority: 16.11.2005 US 737244 P
(43) Date of publication of application: 06.08.2008
(73) Proprietor: Electronics and Telecommunications Research Institute, Daejeon-city 305-350 (KR)
(72) Inventor: KO, Gwangzeen, Seoul 136-073 (KR); HWANG, Sung-Hyun, Suwon-city, Gyeonggi-do 442-782 (KR); KANG, Bub-Joo, Daejeon-city 302-773 (KR); KANG, Chung-Gu, Seoul 137-796 (KR); KIM, Il-Hwan, Incheon-city 406-763 (KR); KIM, Chang-Joo, Daejeon-city 305-761 (KR); SONG, Myung-Sun, Daejeon-city 305-755 (KR)
(74) Representative: Betten & Resch
(86) International application number: PCT/KR2006/004836
(87) International publication number: WO 2007/058490

(56) References cited:
- WO-A1-00/48335
- WO-A1-01/99443
- US-A1- 2002 058 528
- US-A1- 2002 126 635
- US-A1- 2004 146 027
- US-A1- 2004 156 336
- US-A1- 2005 047 383
- US-B1- 6 363 252
- HARADA H: "Software defined radio prototype toward cognitive radio communication systems", 2005 1ST IEEE INTERNATIONAL SYMPOSIUM ON NEW FRONTIERS IN DYNAMIC SPECTRUM ACCESS NETWORKS, BALTIMORE, MD, USA, 8 November 2005 (2005-11-08), pages 539-547, XP010855147, DOI: 10.1109/DYSPAN.2005.1542667 ISBN: 978-1-4244-0013-3
- ZEKAVAT S A ET AL: "User-central wireless system: ultimate dynamic channel allocation", 2005 1ST IEEE INTERNATIONAL SYMPOSIUM ON NEW FRONTIERS IN DYNAMIC SPECTRUM ACCESS NETWORKS, BALTIMORE, MD, USA, 8 November 2005 (2005-11-08), pages 82-87, XP010855102, DOI: 10.1109/DYSPAN.2005.1542620 ISBN: 978-1-4244-0013-3

## Description

### TECHNICAL FIELD

The present invention relates to a method of switching and managing frequency access in a cognitive radio system, and a base station (BS) and a customer premises equipment (CPE, a kind of user equipment) using the method, and more particularly, to a method of allowing a BS or a CPE to determine whether a set frequency channel (frequency access) is not available, a channel switching method for switching from a detected frequency channel, which is determined to be unavailable, to another frequency channel, and a method of allowing a BS or a CPE to efficiently manage frequency channels.

### BACKGROUND ART

The present invention improves data transmission efficiency and spectral utilization efficiency by switching from a frequency channel, which is being used for communication established between a base station (BS) and a customer premises equipment (CPE), to another available frequency channel by exchanging MAC layer control messages of the BS and the CPE when the BS or the CPE determines that the communication channel in use is not available in a cognitive radio system due to access of an incumbent user thereto, multi-path fading, or other channel deterioration, thereby protecting the incumbent user's vested right for a specific frequency band and securing a better transmission channel.

A licensed user belonging to an existing communication system establishes communication with a priority right to use a specific frequency band. Thus, the licensed user can continue occupancy of the specific frequency band. Under such an environment, channel switching is performed in a previously allowed frequency band, and thus, a priority right to use even a channel that is to be switched is also guaranteed. Unlike the above existing communication system, the present invention relates to use of a cognitive radio technology under an open spectrum policy that does not guarantee a priority right to use. In this disclosure, for convenience, a licensed user will be referred to as an incumbent user in terms of a cognitive radio system.

Cognitive radio technology allows a frequency band that is not in use by an incumbent user to be used by aperiodically or periodically scanning or sensing whether the incumbent user is using the frequency band. Further, even if the frequency band is in use, whether the incumbent user accesses the frequency band is periodically sensed in order to discontinue receiving/transmitting of data and switch from a current communication channel to another frequency band that the incumbent user does not access when access of the incumbent user is sensed. Accordingly, it is possible to continue communication by re-establishing the discontinued receiving/transmitting of the data. In this connection, a cognitive radio system according to the present invention is differentiated from the existing communication system.

The main part of the cognitive radio technology is a channel switching process in which access of the incumbent user to a frequency band is sensed, and communication in the frequency band is discontinued and a communication channel is switched to another frequency band that the incumbent user does not access when the access is sensed. In order to solve problems with the channel switching process, the present invention provides channel switching processes for various scenarios that occur when the incumbent user accesses a frequency band. The best prior art document available is WO01/99443.

### DESCRIPTION OF THE DRAWINGS

FIGS. 1 through 4 illustrate signaling used in a channel switching process according to an embodiment of the present invention.
FIG. 5 is a flowchart illustrating a channel switching method according to another embodiment of the present invention.
FIG. 6 illustrates diagrams for explaining scenarios for reporting access of an incumbent user in a Frequency Division Duplex (FDD) system.
FIG. 7 illustrates tables specifying channel switching methods available for the scenarios illustrated in FIG. 6.
FIG. 8 is a table illustrating two MAC control messages according to an embodiment of the present invention.
FIG. 9 is a flowchart illustrating a process in which a customer premises equipment (CPE) transmits the two messages illustrated in FIG. 8 to a base station, according to an embodiment of the present invention.
FIG. 10 is a table illustrating a method of allowing a base station to determine whether a frequency channel is in use, according to an embodiment of the present invention.
FIG. 11 is a flowchart illustrating a channel switching method performed by a base station in a FDD system, according to an embodiment of the present invention.
FIG. 12 is a flowchart illustrating a channel switching method performed by a CPE in a FDD system, according to an embodiment of the present invention.
FIG. 13 is a flowchart illustrating a channel switching method performed by a base station in a Time Division Duplex (TDD) system, according to an embodiment of the present invention.
FIG. 14 is a flowchart illustrating a channel switching method performed by a CPE in a TDD system, according to an embodiment of the present invention.
FIG. 15 is a block diagram of channel switching apparatuses that are respectively included in a base station and a CPE of a cognitive radio system.
FIG. 16 is a block diagram of channel switching apparatuses that are respectively included in a base station and a CPE of a cognitive radio system.
FIG. 17 is a block diagram of channel switching apparatuses that are respectively included in a base station and a CPE of a cognitive radio system.
FIG. 18 is a block diagram of channel switching apparatuses that are respectively included in a base station and a CPE of a cognitive radio system, according to another embodiment of the present invention.
FIG. 19 is a block diagram of a frequency-channel availability determination apparatus included in a base station of a cognitive radio system according to another embodiment of the present invention.
FIG. 20 is a diagram illustrating the concept of an uplink/downlink association method in a conventional FDD system.
FIG. 21 is a diagram illustrating the concept of a method of managing an uplink/downlink frequency channel in an OFDM-FDD system, according to an embodiment of the present invention.
FIG. 22 illustrates a manner in which a base station transmits channel matching information and channel grouping information to a CPE, according to an embodiment of the present invention.
FIG. 23 is a block diagram of an uplink/downlink frequency channel management apparatus included in a base station and an uplink/downlink frequency channel management apparatus included in a CPE, according to an embodiment of the present invention.

### DETAILED DESCRIPTION OF THE INVENTION

### TECHNICAL PROBLEM

The present invention provides a method of determining whether a frequency channel is available in a cognitive radio system capable of efficiently sensing access of an incumbent user.

The present invention also provides a channel switching method for switching from a frequency channel that is sensed to be unavailable to another frequency channel that an incumbent user does not use.

The present invention also provides a method of efficiently managing a frequency channel in a cognitive radio system.

The present invention also provides a base station and a customer premises equipment (CPE) of a cognitive radio system which are capable of performing the above method.

### TECHNICAL SOLUTION

According to an aspect of the present invention, there is provided a channel switching method performed by a base station in a cognitive radio system, the method comprising detecting a currently unavailable first frequency channel from among at least one uplink/downlink frequency channel which is set as a communication channel with customer premises equipment (CPE); transmitting a channel switching request message requesting switching from the first frequency channel to a second frequency channel; and performing channel switching from the first frequency channel to the second frequency channel when receiving from the CPE a channel switching report message that reports that channel switching is to be performed in response to the channel switching request message.

According to another aspect of the present invention, there is provided a channel switching method performed by customer premises equipment (CPE) in a cognitive radio system, the method comprising performing channel switching from a currently unavailable first frequency to a second frequency channel, from among at least one uplink/downlink frequency channel which is set as a communication channel with a base station, when receiving a channel switching request message requesting switching from the first frequency channel to the second frequency channel; and transmitting to the base station a channel switching report message that reports that channel switching is to be performed in response to the channel switching request message.

According to another aspect of the present invention, there is provided a channel switching method performed by a base station in a cognitive radio system, the method comprising detecting a currently unavailable first frequency channel from among at least one uplink/downlink frequency channel which is set as a communication channel with customer premises equipment (CPE); and performing channel switching from the first frequency channel as a communication channel to a second frequency channel which is predefined with the CPE.

According to another aspect of the present invention, there is provided a channel switching method performed by customer premises equipment (CPE) in a cognitive radio system, the method comprising detecting a currently unavailable first frequency channel from among at least one uplink/downlink frequency channel which is set as a communication channel with a base station; and the CPE performing channel switching from the first frequency to a second frequency channel which is predefined with the base station.

According to another aspect of the present invention, there is provided a channel switching method performed by a base station in a cognitive radio system, the method comprising detecting a currently unavailable first frequency channel from among at least one uplink/downlink frequency channel which is set as a communication channel with customer premises equipment (CPE); transmitting a channel switching request message requesting switching from the first frequency channel to a second frequency channel, to the CPE via an outband channel; and upon receiving from the CPE a channel switching report message that reports that channel switching is to be performed in response to the channel switching request message, switching from the first frequency channel to the second frequency channel.

According to another aspect of the present invention, there is provided a channel switching method performed by customer premises equipment (CPE) in a cognitive radio system, the method comprising receiving a channel switching request message requesting switching from a first frequency channel, which is a currently set communication channel, to a second frequency channel from a base station via an outband channel; switching from the first frequency channel to the second frequency channel based on the channel switching request message; and transmitting to the base station a channel switching report message that reports that channel switching is to be performed in response to the channel switching request message.

According to another aspect of the present invention, there is provided a channel switching method performed by a base station in a cognitive radio system, the method comprising detecting a currently unavailable first frequency channel from among at least one uplink/downlink frequency channel which is set as a communication channel with customer premises equipment (CPE); performing explicit signaling in which a channel switching request message requesting switching from the first frequency channel to a second frequency channel is transmitted to the CPE, and waiting for a channel switching report message that reports that channel switching is to be performed in response to the channel switching request message to be received from the CPE; upon receiving the channel switching report message from the CPE, performing channel switching from the first frequency channel to the second frequency channel, using explicit signaling; and when the channel switching report message is not received from the CPE, performing channel switching from the first frequency channel to a third frequency channel which is predefined with the CPE, using implicit signaling.

According to another aspect of the present invention, there is provided a channel switching method performed by customer premises equipment (CPE) in a cognitive radio system, the method comprising performing channel switching using explicit signaling, in which, when receiving a channel switching request message requesting switching from a currently unavailable first frequency channel to a second frequency channel from among at least one uplink/downlink frequency channel which is set as a communication channel with a base station, a channel switching report message reporting which channel switching is to be performed in response to the channel switching request message is transmitted to the base station and the first frequency channel is switched to the second frequency channel; and performing channel switching using implicit signaling, in which the currently unavailable first frequency channel is detected based on whether messages that are to be received, including the channel switching request message, are received and the result of a channel search performed by the CPE; and the detected first frequency channel is switched to a third frequency channel which is predefined with the base station.

According to another aspect of the present invention, there is provided a method of allowing a base station to determine whether a frequency channel for communication with customer premises equipment (CPE) is available in a cognitive radio system, the method comprising determining whether a channel search report message, which is transmitted from the CPE in response to a channel search request from the base station, and an automatic report message, which is periodically transmitted from the CPE to the base station, are received from the CPE; and determining whether an uplink/downlink frequency channel is available for the CPE, based on whether the channel search report message is received and whether the automatic report message is received.

According to another aspect of the present invention, there is provided a channel switching apparatus included in a base station of a cognitive radio system, the apparatus comprising a detecting unit detecting a currently unavailable first frequency channel from among at least one uplink/downlink frequency channel which is set as a communication channel with customer premises equipment (CPE); a channel switching request message transmitting unit transmitting a channel switching request message requesting switching from the first frequency channel to a second frequency channel, to the CPE; and a channel switching unit switching from the first frequency channel to the second frequency channel when receiving from the CPE a channel switching report message that reports that channel switching is to be performed in response to the channel switching request message.

According to another aspect of the present invention, there is provided a channel switching apparatus included in customer premises equipment (CPE) of a cognitive radio system, the apparatus comprising a channel switching unit switching from a currently unavailable first frequency channel to a second frequency channel from among at least one uplink/downlink frequency channel which is set as a communication channel with a base station, when receiving a channel switching request message requesting switching from the first frequency channel to the second frequency channel; and a channel switching report message transmitting unit transmitting to the base station a channel switching report message that reports that channel switching is to be performed in response to the channel switching request message.

According to another aspect of the present invention, there is provided a channel switching apparatus included in a base station of a cognitive radio system, the apparatus comprising a detecting unit detecting a currently unavailable first frequency channel from among at least one uplink/downlink frequency channel which is set as a communication channel with customer premises equipment (CPE); and a channel switching unit switching from the first frequency channel as a communication channel to a second frequency channel which is predefined with the CPE.

According to another aspect of the present invention, there is provided a channel switching apparatus included in customer premises equipment (CPE) of a cognitive radio system, the apparatus comprising a detecting unit detecting a currently unavailable first frequency channel from among at least one uplink/downlink frequency channel which is set as a communication channel with a base station; and a channel switching unit switching from the first frequency channel as a communication channel to a second frequency channel which is predefined with the base station.

According to another aspect of the present invention, there is provided a channel switching apparatus included in a base station of a cognitive radio system, the apparatus comprising a detecting unit detecting a currently unavailable first frequency channel from among at least one uplink/downlink frequency channel which is set as a communication channel with customer premises equipment (CPE); a channel switching request message transmitting unit transmitting a channel switching request message requesting switching from the first frequency channel to a second frequency channel, to the CPE via an outband channel; and a channel switching unit switching from the first frequency channel to the second frequency channel, when receiving from the CPE a channel switching report message that reports that channel switching is to be performed in response to the channel switching request message.

According to another aspect of the present invention, there is provided a channel switching apparatus included in customer premises equipment (CPE) of a cognitive radio system, the apparatus comprising a channel switching request message receiving unit receiving a channel switching request message requesting switching from a first frequency channel, which is a currently set communication channel, to a second frequency channel, from the base station via an outband channel; a channel switching unit switching the first frequency channel as a communication channel to the second frequency channel based on the channel switching request message; and a channel switching report message transmitting unit transmitting to the base station a channel switching report message that reports that channel switching is to be performed in response to the channel switching request message.

According to another aspect of the present invention, there is provided a channel switching apparatus included in a base station of a cognitive radio system, the apparatus comprising a detecting unit detecting a currently unavailable first frequency channel from among at least one uplink/downlink frequency channel which is set as a communication channel with customer premises equipment (CPE); an explicit signaling unit transmitting a channel switching request message requesting switching from the first frequency channel to a second frequency channel to the CPE, and waiting to receive from the CPE a channel switching report message that reports that channel switching is to be performed in response to the channel switching request message; a channel switching unit switching from first frequency channel to the second frequency channel by using explicit signaling, when receiving the channel switching report message from the CPE; and a channel switching unit switching from the first frequency channel to a third frequency channel, which is predefined with the CPE, by using implicit signaling, when the channel switching unit does not receive the channel switching report message from the CPE.

According to another aspect of the present invention, there is provided a channel switching apparatus included in customer premises equipment (CPE) of a cognitive radio system, the apparatus comprising a channel switching unit transmitting to a base station a channel switching report message that reports that channel switching is to be performed in response to a channel switching request message, and switching from a first frequency channel to a second frequency channel by using explicit signaling, when receiving the channel switching request message requesting switching the first frequency channel, which is currently unavailable, to the second frequency channel from among at least one uplink/downlink frequency channel which is set as a communication channel with the base station; and a channel switching unit detecting the currently unavailable frequency channel, based on whether messages that are to be received, including the channel switching request message, are received and the result of a channel search performed by the CPE, and switching the detected first frequency channel to a third frequency channel which is predefined with the base station.

According to another aspect of the present invention, there is provided an apparatus which is included in a base station of a cognitive radio system and determines whether a frequency channel is available for communication with customer premises equipment (CPE), the apparatus comprising message reception determination unit determining whether a channel search report message, which is transmitted from the CPE in response to a channel search request from the base station, and an automatic report message, which is periodically transmitted from the CPE to the base station, are received from the CPE; and an availability determination unit determining whether an uplink/downlink frequency channel is available between the base station and the CPE, based on whether the channel search report message is received and whether the automatic report message is received.

According to another aspect of the present invention, there is provided a method of allowing a base station to manage an uplink/downlink frequency channel for use in communication with each customer premises equipment (CPE) in a cognitive radio system, the method comprising generating and managing channel matching information regarding a pair of a uplink frequency channel and a downlink frequency channel which are used by the same CPE; and transmitting the generated channel matching information to the CPEs.

According to another aspect of the present invention, there is provided a method of allowing customer premises equipment (CPE) to manage an uplink/downlink frequency channel for use in communication in a cognitive radio system, the method comprising receiving channel matching information regarding a pair of a uplink frequency channel and a downlink frequency channel, which are used by the same CPE, from a base station; and performing processing by obtaining information regarding a channel to the CPE or by performing channel switching.

According to another aspect of the present invention, there is provided an apparatus which is included in a base station of a cognitive radio system and manages a uplink/downlink frequency channel, the apparatus comprising a management unit generating and managing channel matching information regarding a pair of a uplink frequency channel and a downlink frequency channel which are used by the same customer premises equipment (CPE); and a transmitting unit transmitting the generated channel matching information to the CPEs.

According to another aspect of the present invention, there is provided an apparatus which is included in customer premises equipment (CPE) of a cognitive radio system and manages a uplink/downlink frequency channel, the apparatus comprising a receiving unit receiving channel matching information regarding a pair of uplink frequency channel and a downlink frequency channel, which are used by the same CPE, from a base station; and a processor obtaining information regarding a channel allocated to the CPE or performing channel switching, based on the received channel matching information.

### ADVANTAGEOUS EFFECTS

According to the present invention, when a frequency channel used in a cognitive radio system is unavailable due to access of an incumbent user to the frequency channel or due to a propagation environment of the frequency channel, the frequency channel can be efficiently switched to a new frequency channel, thereby securing a reliable channel environment of the cognitive radio system while guaranteeing the incumbent user's right to use the frequency channel.

Also, according to the present invention, it is possible to efficiently determine whether a frequency channel used in a cognitive radio system is unavailable due to access of an incumbent user to the frequency channel or due to a propagation environment of the frequency channel.

Also, according to the present invention, it is possible to efficiently perform channel management for customer premises equipments (CPEs) in a cell in an FDD system through channel matching and channel grouping, and reduce overhead of an MAP message.

### MODE FOR THE INVENTION

Hereinafter, exemplary embodiments of the present invention will be described in greater detail with reference to the accompanying drawings.

Conventionally, a fixed communication system is established between a base station and customer premises equipment by using a permitted frequency and a fixed channel bandwidth. However, since frequency resources may be limited according to time and place, there is a need to effectively supply idle frequency resources to a location where a demand occurs. In particular, since permitted frequency resources are not always used in a low-populated region or in a low frequency communication, e.g., a public safety channel, wasting of frequency resources may be more serious. A cognitive radio system, which is designed in order to solve these problems, is a communication system whereby frequency resources are effectively used by searching for a frequency band available at a desired time period and at a desired place and allocating it to a proper person. The present invention introduces a method of satisfactorily performing the channel switching process that is the main part of the cognitive radio technology.

To help understand the present invention, a general idea of the present invention will be described with respect to the IEEE 802.22 WRAN (Wireless LAN) system which is an OFDM/FDD (Orthogonal Frequency Division Multiplexing/Frequency Division Duplex) system or an OFDM/TDD (Time Division Duplex) system. The IEEE 802.22 WRAN system is capable of searching broadcast very high frequency (VHF)/ultra high frequency (UHF) bands for an idle broadcast channel bandwidth and providing a service to a cognitive mobile user by using the idle broadcast channel bandwidth.

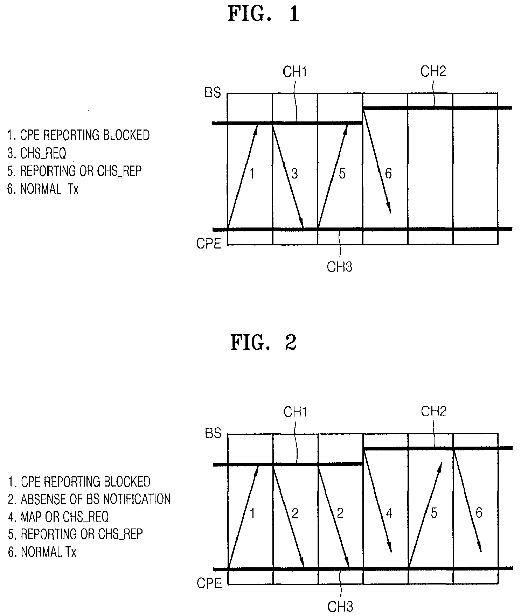

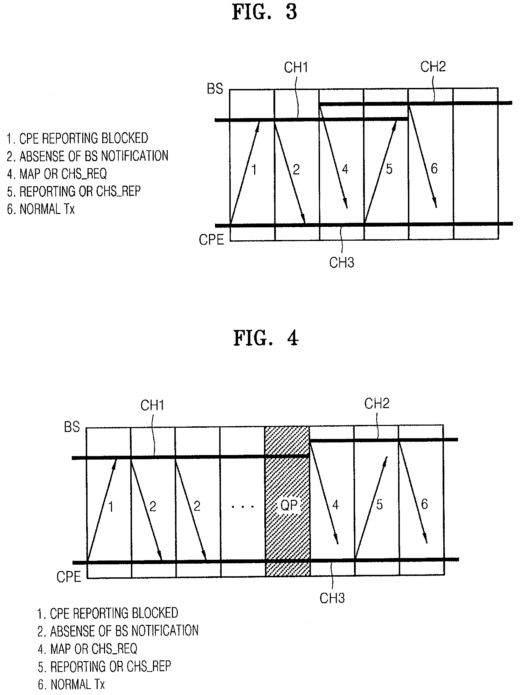

FIGS. 1 through 4 illustrate signaling used in a channel switching process according to an embodiment of the present invention. In detail, FIGS. 1 through 4 illustrate the flow of a medium access control (MAC) control message exchanged between a base station and customer premises equipment (CPE) in an OFDM/FDD-based cognitive radio system, according transmission time of each packet. FIG. 1 illustrates the flow of a MAC control message used in a channel switching process using explicit signaling. FIG. 2 illustrates the flow of a MAC control message used in a channel switching process using short implicit signaling. FIG. 3 illustrates the flow of a MAC control message used in a channel switching process using outband signaling. FIG. 4 illustrates the flow of a MAC control message used in a channel switching process using implicit signaling.

Referring to FIG. 1, the base station transmits information to the CPE by using a channel 1(CH1), which is a downlink frequency channel, and the CPE transmits information to the base station by using a channel 3(CH3) which is an uplink frequency channel. In the case of the OFDM/TDD-based cognitive radio system, the channels 1 and 3 (CH1 and CH3) are the same frequency channel.

More specifically, FIG. 1 illustrates a case where the base station cannot receive a message from the CPE, due to access of an incumbent user to the channel 1(CH1), which is a downlink frequency channel, or due to deterioration of the channel 1(CH1). That is, the base station and the CPE must switch from the channel 1(CH1), which is a downlink frequency channel, to another downlink frequency channel, i.e., a channel 2(CH2).

The channel switching process using explicit signaling according to an embodiment of the present invention will be described with reference to FIG. 1. FIG. 1 illustrates a channel switching process in which the base station cannot receive a BLM_REP message, indicated with an arrow 1, which is to be received from the CPE, due to a problem with the channel 1(CH1) which is a downlink frequency channel. That is, a BLM_REQ message is not transmitted to the CPE due to the problem with the channel 1(CH1), which is a downlink frequency channel, and thus, the CPE does not transmit the BLM_REP message, indicated with the arrow 1, to the base station. Here, the BLM_REP message is a channel search report message containing the result of a channel search performed by the CPE, in response to the BLM_REQ message that is a channel search request message containing a request, from the base station, which requests the CPE to perform a channel search (spectrum sensing).

In FIG. 1, when the base station does not receives the BLM_REP message, which is to be received, from the CPE via a first frame, the base station transmits a CHS_REQ (channel switching request) message, indicated with an arrow 3, which is a message corresponding to explicit signaling, to the CPE. Here, the CHS_REQ message is a channel switching request message containing information regarding a frequency channel before/after channel switching and the base station's instruction for the CPE to perform channel switching. That is, when the base station does not receive the BLM_REP message from the CPE via the first frame, the base station transmits the CHS_REQ message, indicated with the arrow 3, which is a message corresponding to explicit signaling, to the CPE in order that the CPE switches from the channel 1(CH1) to the channel 2(CH2). That is, the CHS-REQ message is a MAC control message that contains an explicit message indicating a channel to be switched.

Upon receiving the CHS-REQ message indicated with the arrow 3, the CPE switches to the channel indicated in the CHS-REQ message, and transmits a CHS_REP message, indicated with an arrow 5, which is a channel switching report message that reports channel switching, to the base station. Then, as soon as receiving the CHS_REP message, the base station can secure a new communication channel via the channel 2(CH2).

A channel switching process using short implicit signaling according to an embodiment of the present invention will be described with reference to FIG. 2. Similar to FIG. 1, FIG. 2 illustrates a channel switching process in which the base station cannot receive a BLM_REP message, indicated with an arrow 1, which is to be received, from a CPE, due to a problem with a channel 1(CH1) which is a downlink frequency channel.

When the base station does not receive the BLM_REP message, indicated with the arrow 1, which is to be received, from the CPE, the base station transmits a CHS_REQ message, indicated with an arrow 2, to the CPE. The CHS_REQ message contains an instruction, from the base station, which has been described above with respect to explicit signaling with reference to FIG. 1.

Likewise, the CPE does not receive the CHS_REQ message or a MAP message, which is to be received, from the base station via a second frame, due to a problem with the channel 1(CH1), which is a downlink frequency channel, and thus cannot transmit a signal to the base station in response to the CHS_REQ message or the MAP message. That is, the base station transmits the MAP message in a normal communication channel state and transmits the CHS_REQ message when channel switching is required due to access of a licensed user. Thus, an instruction that the CPE is to receive from the base station is the MAP message or the CHS_REQ message. In particular, in an embodiment of FIG. 2, an instruction from the base station is the CHS_REQ message indicated with the arrow 2, and thus, the CPE cannot transmit a CHS_REP message which is a response message to the CHS_REQ message. Accordingly, the base station does not receive any response from the CPE and retransmits the CHS_REQ message, indicated with the arrow 2, via a third frame.

In this case, both the base station and the CPE cannot receive messages that are to be received. That is, a propagation environment that deteriorates a channel environment (e.g., access of an incumbent user) influences both uplink and downlink frequency channels.

Under such a condition, upon not receiving a message, which is to be received, from the CPE a predetermined number of times, the base station switches from the channel 1(CH1), which is a current downlink frequency channel, to a channel 2(CH2) which is predefined with the CPE. Likewise, the CPE does not receive an instruction from the base station (the CHS_REQ message or the MAP message), which is to be received a predetermined number of times, and thus switches from the channel 1(CH1), which is a current downlink frequency channel, to the channel 2(CH2) which is predefined with the base station.

Specifically, the base station transmits the CHS_REQ message to the CPE the predetermined number of times. Upon not receiving a response (the CHS_REP message) from the CPE, the base station assumes that there is a problem with a communication line between the base station and the CPE, and switches from the current channel 1(CH1) to the predefined channel 2(CH2). Similarly, the CPE does not receive the message (the CHS_REQ message or the MAP message), which is to be received the predetermined number of times, from the base station and thus assumes that the communication line has a problem and switches to the predefined channel 2(CH2) for rendezvous with the base station. A channel switching process in which whether channel switching is required is determined by checking whether a message, which is to be received, is received, without explicit signaling that has been described above with reference to FIG. 1, is referred to as the channel switching process using implicit signaling.

Implicit signaling is divided into short implicit signaling and implicit signaling, according to the amount of time to wait for the opposite party's response (FIG. 2 illustrates short implicit signaling and FIG. 4 illustrates implicit signaling). In an implicit communication method as illustrated in FIG. 4, the amount of time that the base station requires to wait for a response from the CPE is greater than a subsequent quiet period (QP). Here, in the cognitive radio technology, the QP denotes a duration for which the base station or the CPE discontinues data transmission and listens whether an incumbent user establishes communication in order to scan or sense whether a licensed user accesses a channel in use. In the case of a TDD system, both the base station and the CPE must discontinue data transmission.

A channel switching process using outband signaling according to an embodiment of the present invention will be described with reference to FIG. 3. Here, outband denotes a frequency channel not in use by both a base station and a CPE.

Similarly to FIG. 1, FIG. 3 also illustrates a channel switching process in which the base station cannot receive a BLM_REP message, indicated with an arrow 1, which is to be received from the CPE, due to a problem with a channel 1(CH1) which is a downlink frequency channel.

Upon not receiving the BLM_REP message, indicated with the arrow 1, which is to be received from the CPE, the base station transmits a CHS_REQ message, indicated with an arrow 2, which is the base station's instruction described above with respect to explicit signaling of FIG. 1, to the CPE, and transmits to the CPE a CHS-REQ message or a MAP message, indicated with an arrow 4, via a channel 2(CH2), which is an outband, using a subsequent frame.

In this case, when the CPE does not receive the base station's response (the CHS-REQ message or the MAP message indicated with the arrow 2) to the BLM_REP message, indicted with the arrow 1, via the channel 1(CH1) (a current downlink frequency channel) a predetermined number of times, the CPE switches to channel 2(CH2) in order to receive a MAC control message (the CHS_REQ message or the MAP message indicated with the arrow 4) via the channel 2(CH2).

In this case, the base station does not discontinue access to the channel 1(CH1). The base station permits access of the CPE to the channel 2(CH2), upon receiving from the CPE a response (the CHS_REP message or the BLM_REP message indicated with an arrow 5) to the CHS_REQ message or the MAP message, indicated with the arrow 4, which is transmitted via the channel 2(CH2). If the base station does not receive from the CPE a response, indicated with the arrow 5, to the CHS_REQ message or the MAP message, indicated with the arrow 4, which is transmitted via the channel 2(CH2), the base station considers switching to another channel (not shown).

FIG. 3 illustrates that the base station and the CPE continuously use the channel 2(CH2) continuously and for a channel switching time period.

A channel switching process using implicit signaling according to an embodiment of the present invention will be described with reference to FIG. 4. In the cognitive radio system, the base station obtains a large amount of information regarding a channel environment after a QP, and thus delays determining whether channel switching is required until a subsequent QP, unlike in the embodiment of FIG. 2. If the base station does not receive a BLM_REP message, which is the CPE's response within the QP, the base station switches to a predefined channel 2(CH2) and establishes communication with the CPE via the channel 2(CH2), similar to the short implicit communication method illustrated in FIG. 2. Likewise, when the CPE does not receive from the base station the CHS_REQ message which is the base station's response or the MAP message containing information regarding a frequency channel allocated to the CPE, the CPE switches to the predefined channel 2(CH2) and establishes communication with the base station via the channel 2(CH2).

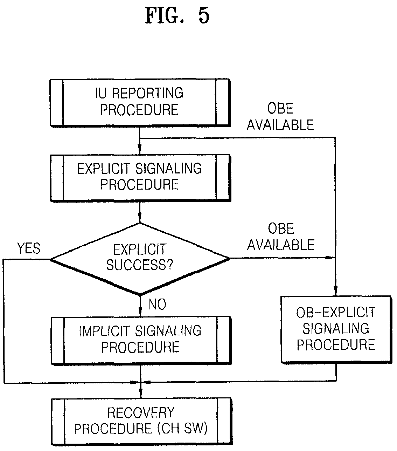

FIG. 5 is a flowchart illustrating a channel switching method, according to another embodiment of the present invention, in which of the channel switching processes of FIGS. 1 through 4 are sequentially performed.

First, a base station determines whether channel switching is required, based on a CPE's report and/or an incumbent user's report. When it is determined that channel switching is required, the base station transmits to the CPE a channel switching request CHS_REQ message indicating a frequency channel to be moved from a current frequency channel. Here, a method of transmitting the CHS_REQ message via the current downlink frequency channel is explicit signaling, and a method of transmitting the CHS_REQ message via an outband is outband signaling.

When communication is not established after performing explicit signaling, implicit signaling is performed. That is, the base station and the CPE perform channel switching rapidly when explicit signaling succeeds, and implicit signaling when explicit signaling fails. That is, the base station and the CPE perform implicit signaling in which whether channel switching is required is determined according to whether messages, which are to be respectively received by the base station and the CPE, are actually received.

Although not included in the above description, outband signaling may be used in place of explicit signaling or implicit signaling, as illustrated in FIG. 5. In this case, the base station determines whether an outband is available, and transmits the CHS_REQ message or a MAP message to the CPE via the outband when the outband is available.

As described above, the technical purpose of the present invention is to satisfactorily perform channel switching by performing the above signaling methods sequentially or complementarily in the cognitive radio system.

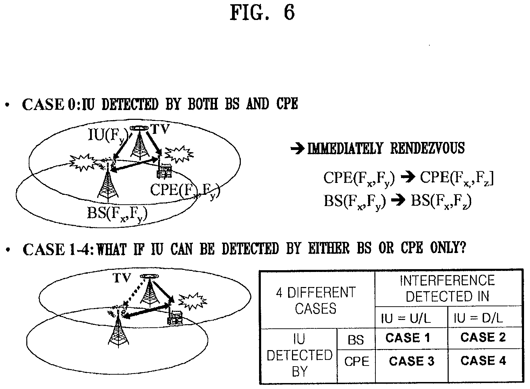

FIG. 6 illustrates diagrams for explaining scenarios for reporting access of an incumbent user in the FDD system.

For example, when a signal from an incumbent user is detected in a large region and both a base station and a CPE can thus recognize access of the incumbent user (CASE 0), the base station and the CPE rapidly perform channel switching to a predefined specific frequency band. In this case, the above signaling need not be performed since both the base station and the CPE recognized the presence of the incumbent user.

In CASES 1 through 4, only one of the base station and the CPE recognizes the access of the incumbent user. CASES 1 through 4 are categorized according to whether the base station or the CPE recognizes the access of the incumbent user and whether the incumbent user accesses an uplink frequency channel or a downlink frequency channel.

As illustrated in FIG. 4, in CASE 1, the base station detects access of an incumbent user, and the incumbent user accesses the uplink frequency channel. Similarly, in CASE 2, the base station detects access of the incumbent user to the downlink frequency channel. In CASE 3, the CPE detects access of the incumbent user to the uplink frequency channel. In CASE 4, the CPE detects access of the incumbent user to the downlink frequency channel.

In the case of the FDD system, the above channel switching process is limitedly used according to such a scenario related to access of the incumbent user, and thus, access of a licensed user is categorized using a total of five scenarios as illustrated in FIG.6.

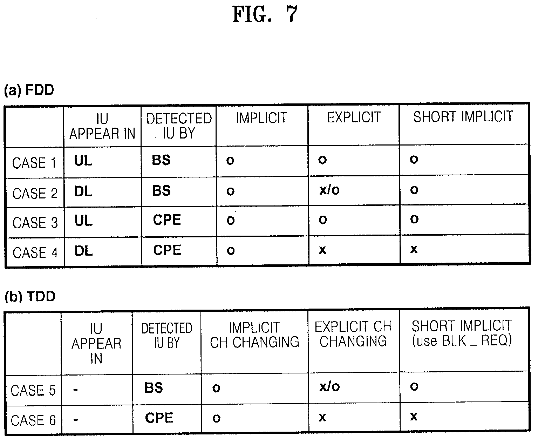

FIG. 7 illustrates tables specifying channel switching methods available for each of the scenarios categorized in FIG. 6. The upper table shows channel switching methods when the FDD system is used, and the lower table shows channel switching methods when the TDD system is used. First, the upper table will be described.

In CASE 1, all implicit signaling, short implicit signaling, and explicit signaling are available. Here, outband signaling is available for all CASES 1 through 4, and is thus not included in the tables.

However, in CASE 2, only implicit signaling and short implicit signaling are available, and explicit signaling may be available in some cases.

Explicit signaling is not available when a message (the CHS-REQ message), for explicit signaling, from the base station is interfered with by access of the incumbent user to the downlink frequency channel, thus preventing the CPE from receiving the CHS-REQ message or the content of the CHS_REQ message from being restored.

However, in CASE 2 where only the base station senses the access of the incumbent user, the access of the incumbent user does not influence the CPE, and thus, the power level of a signal transmitted from the base station to the CPE is stronger than that of a signal transmitted from the incumbent user to the CPE. Accordingly, explicit signaling may succeed or fail depending on the power level of signal transmitted to the CPE.

In CASE 3, all signaling methods are available. CASE 4 is similar to CASE 2 but it is very probable that the CPE cannot receive a message (the CHS_REQ message) from the base station since the power level of a signal transmitted from the base station to the CPE is similar to that of a signal transmitted from the incumbent user to the CPE. That is, in CASE 4, all signaling methods other than implicit signaling, are likely to fail.

The lower table of FIG. 7 shows channel switching methods when the TDD system is used. In the TDD system, an uplink frequency channel and a downlink frequency channel are the same, and there are also problems with the downlink frequency channel that plays a leading role in the FDD system. Thus, the portions related to the downlink frequency channel that are disclosed in the upper table regarding the FDD system, are also applied to the lower table regarding the TDD system.

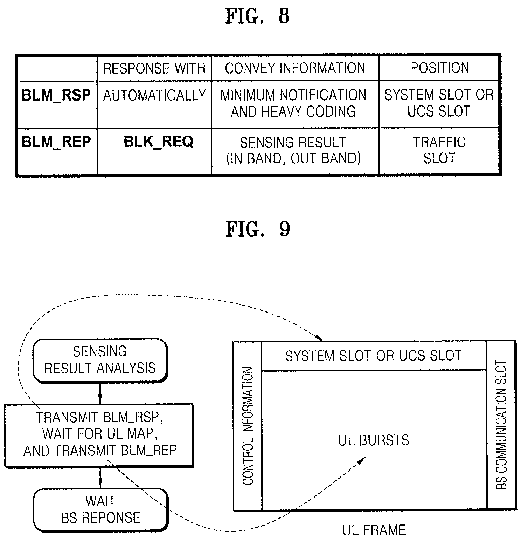

FIG. 8 is a table illustrating two types of MAC control messages according to an embodiment of the present invention. That is, FIG. 8 illustrates two types of MAC control messages designed to solve the problems described with reference to FIG. 7.

First, a BLM_RSP (bulk response) message is automatically and periodically reported by a CPE without an instruction from a base station. In this disclosure, the BLM_RSP message will be referred to as an automatic report message for convenience of explanation. The BLM_RSP message is automatically reported to the base station via a specific part (a system slot or an Urgent Coexistence Slot (UCS) slot) of an uplink frame defined in the cognitive radio system, or via a traffic channel allocated to the CPE by the base station.

The BLM_REP (bulk report) message is reported only via a specific burst (US burst) on an uplink frame allocated by the base station, in response to a BLM_REQ (bulk request) message which is a channel search request message from the base station. The BLM_REP message cannot be reported to the base station without the BLM_REQ message.

FIG. 9 is a flowchart illustrating a process in which a CPE transmits the two types of messages (the BLM_REP message and the BLM_RSP message), illustrated in FIG. 8, to a base station.

The CPE periodically performs spectrum sensing so as to detect access of an incumbent user, and transmits a BLM_RSP message to a system slot or a UCS slot. Also, the CPE waits for an uplink MAP (UL-MAP) message, and transmits a BLM_REP message containing the result of spectrum sensing to an uplink burst assigned to the uplink MAP message.

Next, the CPE waits for an instruction from the base station. The instruction from the base station is a CHS_REQ message when the base station determines to perform channel switching depending on whether the two messages are received, and the MAP message regarding a current uplink/downlink frequency channel when the base station determines not to perform channel switching.

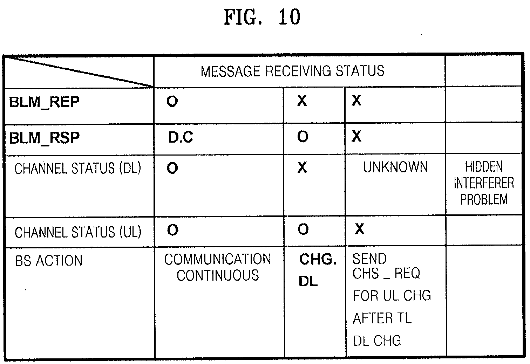

FIG. 10 is a table illustrating a method of allowing a base station to determine whether a frequency channel is in use, according to an embodiment of the present invention. That is, FIG. 10 illustrates a method in which the base station determines whether a current uplink/downlink frequency channel is available, using two messages (the BLM_REP message and the BLM_RSP message) reported from a CPE according to the process illustrated in FIG. 9.

First, the second column of the table of FIG. 10 will be described. The base station determines that both the uplink and downlink frequency channels operate normally when the BLM_REP message is normally received, regardless of whether the BLM_RSP message is received. This is because the base station can receive the BLM_REP message only when both the uplink and downlink frequency channels normally operate. In this case, communication is continuously established with the current uplink and downlink frequency channels without performing channel switching.

Next, the third column of the table of FIG. 10 will be described. The third row shows a case where only the BLM_RSP message of received messages is readable. In this case, the base station determines there is a problem with the downlink frequency channel. That is, it is determined that the uplink frequency channel has no problem since the BLM_RSP message is normally received, and a BLM_REQP message causing the BLM_REP message to be transmitted is not properly transmitted to the CPE via the downlink frequency channel since the BLM_REP message is not received. In this case, the base station transmits a CHS_REQ message to the CPE in order to switch the downlink frequency channel.

Next, the fourth column of the FIG. 10 will be described. Upon not receiving both the BLM_REP message and the BLM_RSP message, the base station determines that the uplink frequency channel has a problem, but cannot determine whether the downlink frequency channel also has a problem. In this case, the base station transmits a request for channel switching for the uplink frequency channel to the CPE. However, nevertheless, when communication cannot be re-established, the base station determines that the downlink frequency channel also has a problem and performs channel switching on the downlink frequency channel, using the above signaling method.

Although each message to be transmitted to a system slot contains only specific CDMA code, the base station has previously obtained information regarding the code and can decipher the BLM_RSP message in most cases. That is, the base station can generally, normally receive the BLM_RSP message, and therefore, the case corresponding to the fourth column of the table of FIG. 10 hardly occurs. Accordingly, the base station can determine whether each of the uplink and downlink frequency channels has a problem, based on whether the BLM_REP message and the BLM_RSP message are received.

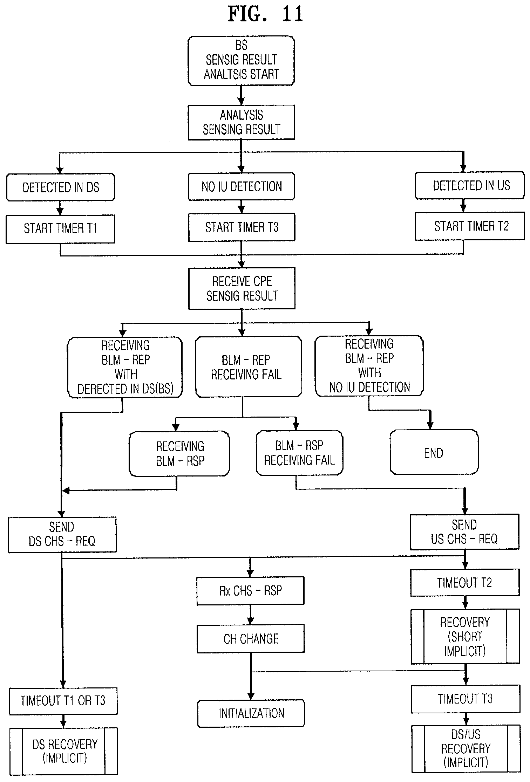

FIG. 11 is a flowchart illustrating a channel switching method performed by a base station in the FDD system, according to an embodiment of the present invention.

First, the base station performs a channel search by using spectrum sensing, and analyzes the result of the channel search so as to determine whether an incumbent user accesses an uplink frequency channel or a downlink frequency channel. If it is determined that the incumbent user accesses the downlink frequency channel, a T1 timer operates. If it is determined that the incumbent user accesses the uplink frequency channel, a T2 timer operates. If it is determined that the incumbent user does not access both the uplink and downlink frequency channels, a T3 timer operates.

After operating the above timer, the base station waits for messages to be reported from the CPE. Here, the messages are the BLM_REP message and the BLM_RSP message.

When the result of channel search shows that the incumbent user does not access the uplink and downlink frequency channels and the base station receives the BLM_REP message, the base station determines that channel switching is not required. Therefore, the base station continues communication with the CPE via the current uplink/downlink frequency channel.

When the base station receives the BLM_REP message and determines that the incumbent user accesses the downlink frequency channel, based on the result of channel search of the CPE and the result of channel search of the base station that are contained in the BLM_REP message, the base station transmits a CHS_REQ message containing a request to switch from the downlink frequency channel to the CPE. Similarly, upon receiving the BLM_RSP message and not the BLM_REP message, the base station transmits the CHS_REQ message to the CPE. Then, the base station waits for a CHS_REP message as a response to the CHS_REQ message until a timeout of the T1 timer or the T3 timer. If receiving the CHS_REP message before the timeout of the T1 timer or the T3 timer, the base station switches the downlink frequency channel and performs an initialization process which is a follow-up process to channel switching. If the base station does not receive the CHS_REP message until the timeout of the T1 timer or the T3 timer, the base station determines that the downlink frequency channel has a problem and switches from the downlink frequency channel to another frequency channel that is predefined with the CPE, using implicit signaling described above with reference to FIG. 2 or 4.

When the base station does not receive both the BLM_REP message and the BLM_REP message, the base station first transmits the CHS_REQ message requesting switching of the uplink frequency channel to the CPE, and determines whether it receives the CHS_REP message which is a response message to the CHS_REQ message from the CPE before a timeout of the T2 timer. When receiving the CHS_REP message from the CPE before the timeout of the T2 timer, the base station switches the uplink frequency channel and performs the initialization process which is a follow-up process to channel switching. If the base station does not receive the CHS_REP message until the timeout of the T2 timer, the base station performs channel switching on the uplink frequency channel, using short implicit signaling described above with reference to FIG. 2. Thereafter, when communication is not re-established with the CPE before the timeout of the T3 timer, channel switching is performed on the uplink/downlink frequency channel, using implicit signaling described above with reference to FIG. 4.

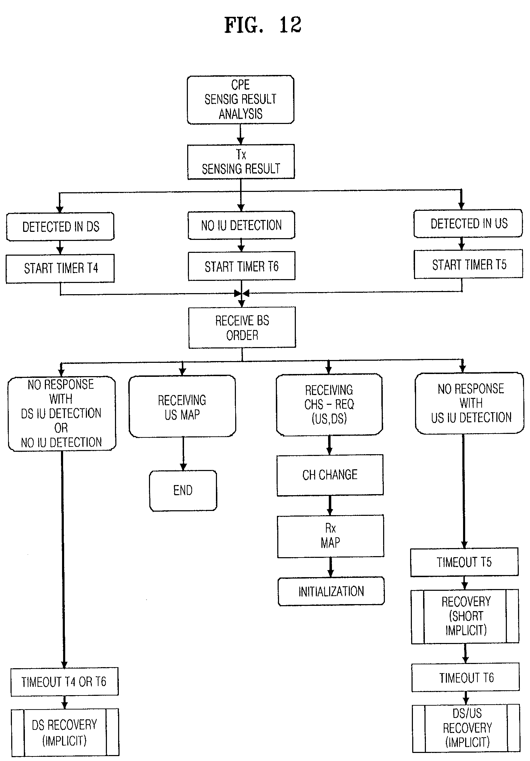

FIG. 12 is a flowchart illustrating a channel switching method performed by a CPE in the FDD system according to an embodiment of the present invention.

First, the CPE performs a channel search by using spectrum sensing, and reports the result of channel search to the base station. Then, the CPE analyzes the result of the channel search in order to determine whether an incumbent user accesses an uplink frequency channel or a downlink frequency channel. If it is determined that the incumbent user accesses the downlink frequency channel, a T4 timer operates. If it is determined that the incumbent user accesses the uplink frequency channel, a T5 timer operates. If it is determined that the incumbent user does not access both the uplink and downlink frequency channels, a T6 timer operates.

After operating the above timer, the CPE waits for instruction messages from the base station. Here, the instruction messages from the base station are the above MAP message and the CHS_REQ message.

If the result of channel search shows that the incumbent user does not access the uplink frequency channel, the CPE determines whether the instruction messages are received from the base station until a timeout of the T4 timer or the T6 timer. When the CPE does not receive the instruction messages from the base station until the timeout of the T4 timer or the T6 timer base station, the CPE performs channel switching on the downlink frequency channel using implicit signaling described above with reference to FIG. 2 or 4.

If the result of the channel search shows that the incumbent user accesses the uplink frequency channel, the CPE determines whether it receives an instruction message from the base station until a timeout of the T5 timer. If the CPE does not receive the instruction message from the base station until the timeout of the T5 timer, the CPE performs channel switching on the uplink frequency channel, using short implicit signaling described above with reference to FIG. 2. Then, the base station determines whether communication is re-established with the base station until a timeout of the T6 timer, and performs channel switching on the uplink/downlink frequency channel by using implicit signaling described above with reference to FIG. 2 or 4 when the communication is not re-established.

Upon receiving the MAP message, the CPE continues the communication by using a current uplink/downlink frequency channel.

Upon receiving the CHS_REQ message, the CPE performs channel switching on the uplink frequency channel or the downlink frequency channel according to an instruction contained in the CHS_REQ message, and waits for the MAP message from the base station. Upon receiving the MAP message, the CPE performs the initialization process which is a follow-up process to channel switching.

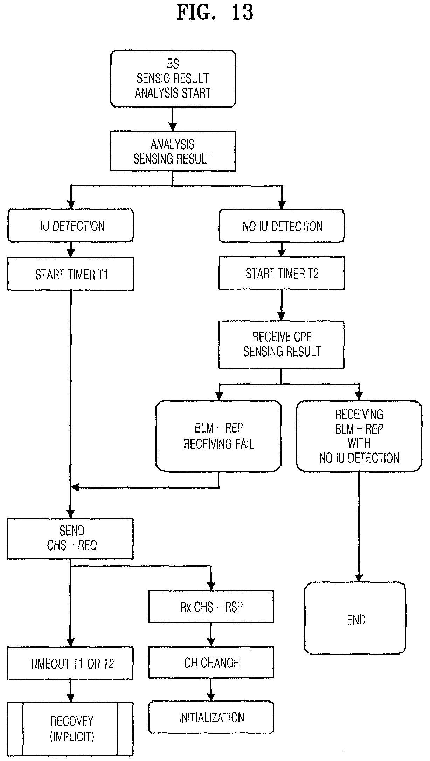

FIG. 13 is a flowchart illustrating a channel switching method performed by a base station in the TDD system, according to an embodiment of the present invention.

First, the base station performs a channel search by using spectrum sensing, and analyzes the result of the channel search in order to determine whether an incumbent user accesses an uplink/downlink frequency channel. If the result of the channel search reveals that the incumbent user accesses the uplink/downlink frequency channel, a T1 timer operates, and if not so, a T2 timer operates.

After operating the above timer, the base station waits for a message to be reported from a CPE. Here, the message is the above BLM_REP message.

The base station transmits the CHS_REQ message requesting switching of the uplink/downlink frequency channel to the CPE, when the result of the base station reveals that the incumbent user does not access the uplink/downlink frequency channel and the base station does not receive the BLM_REP message, or when the result of the channel search reveals that the incumbent user accesses the uplink/downlink frequency channel. Thereafter, when receiving the CHS_REP message until a timeout of the T1 timer or the T2 timer, the base station switches the uplink/downlink frequency channel and performs an initialization process which is a follow-up process to channel switching. When the base station does not receive the CHS_REP message until the timeout of the T1 timer or the T2 timer, the base station performs channel switching on the uplink/downlink frequency channel using implicit signaling described above with reference to FIG. 2 or 4.

When the result of channel search reveals that the incumbent user does not access the uplink/downlink frequency channel and the base station receives the BLM_REP message, the base station continues communication with the CPE via a current uplink/downlink frequency channel.

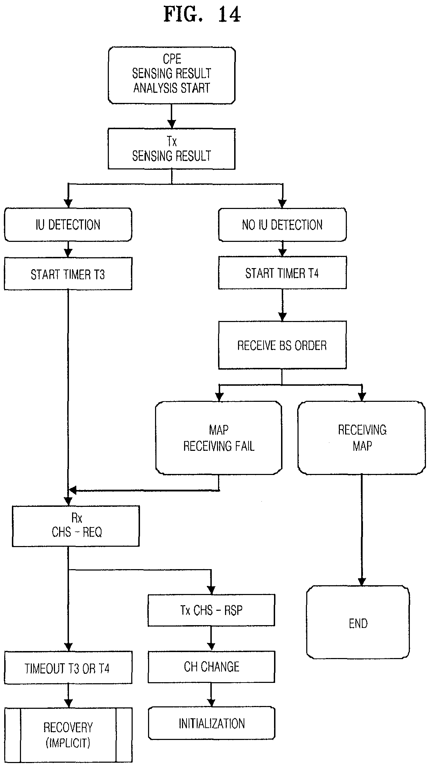

FIG. 14 is a flowchart illustrating a channel switching method performed by a CPE in the TDD system, according to an embodiment of the present invention.

First, the CPE performs a channel search by using spectrum sensing and reports the result of channel search to the base station. Then, the CPE analyzes the result of the channel search in order to determine whether an incumbent user accesses an uplink/downlink frequency channel. If it is determined that the incumbent user accesses the uplink/downlink frequency channel, a T3 timer operates, and if not so, a T4 timer operates.

After operating the above timer, the CPE waits for instruction messages from the base station. Here, the instruction messages are the above MAP message and the CHS_REQ message.

The CPE waits to receive the CHS_REQ message until a timeout of the T3 timer or the T4 timer, when the result of the channel search reveals that an incumbent user accesses an uplink/downlink frequency channel or when the result of the channel search reveals that the incumbent user does not access the uplink/downlink frequency channel and the CPE does not receive the MAP message. When the CPE does not receive the CHS_REQ message timeout of the T3 timer or the T4 timer, the CPE performs channel switching on the uplink/downlink frequency channel using implicit signaling described above with reference to FIG. 2 or 4. When receiving the CHS_REQ message before the timeout of the T3 timer or the T4 timer, the CPE performs channel switching on the uplink/downlink frequency channel in response to the CHS_REQ message, and performs the initialization process which is a follow-up process to channel switching.

When the result of the channel search reveals that the incumbent user does not access the uplink/downlink frequency channel and the CPE receives the MAP message, the CPE continues communication with the base station via a current uplink/downlink frequency channel.

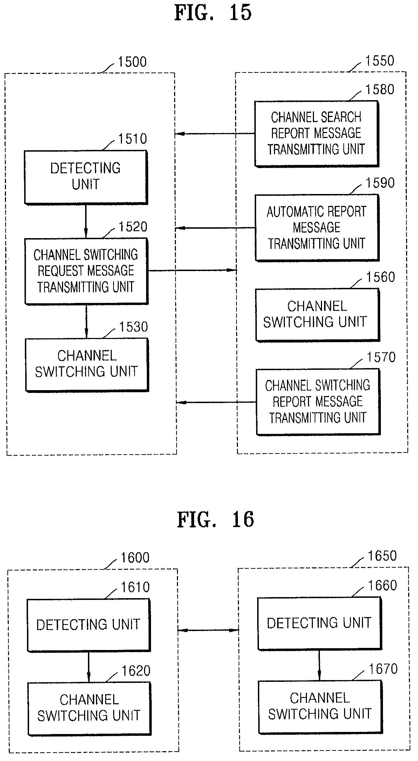

FIG. 15 is a block diagram of channel switching apparatuses 1500 and 1550 that are respectively included in a base station and a CPE of a cognitive radio system, not according to an embodiment of the present invention.

In an embodiment of the present invention, referring to FIG. 15, the channel switching apparatus 1500, which is included in the base station for channel switching using explicit signaling, includes a detecting unit 1510, a channel switching request message transmitting unit 1520, and a channel switching unit 1530.

The detecting unit 1510 detects a currently unavailable first frequency channel from among at least one uplink/downlink frequency channel that is set as a communication channel together with the CPE. Here, the detecting unit 1510 detects the first frequency channel, based on at least one of whether a message that is to be received is received and the result of a channel search of the base station. In an embodiment of the present invention, the message that is to be received includes a channel search report message that the CPE transmits in response to a channel search request from the base station, and an automatic report message that the CPE periodically transmits to the base station. The detecting unit 1510 detects the frequency channel, based on whether the channel search report message is received, the result of channel search of the CPE, which is contained in the received channel search report message, and whether the automatic report message is received.

The channel switching request message transmitting unit 1520 transmits a channel switching request message requesting switching from the first frequency channel to a second frequency channel to the CPE.

Upon receiving from the CPE a channel switching report message reporting that channel switching is to be performed in response to the channel switching request message, the channel switching unit 1530 switches from the first frequency channel to the second frequency channel.

In an embodiment, referring to FIG. 15, the channel switching apparatus 1550, which is included in the CPE for channel switching using explicit signaling, includes a channel switching unit 1560, a channel switching report message transmitting unit 1570, a channel search report message transmitting unit 1580, and an automatic report message transmitting unit 1590.

Upon receiving a channel switching request message that requests switching from a currently unavailable first frequency channel to a second frequency channel from among at least one uplink/downlink frequency channel that is set as a communication channel with the base station, the channel switching unit 1560 switches from the first frequency channel to the second frequency channel.

The channel switching report message transmitting unit 1570 transmits a channel switching report message reporting that channel switching is to be performed in response to the channel switching request message, to the base station.

Upon receiving a channel search request message requesting a channel search from the base station, the channel search report message transmitting unit 1580 transmits a channel search report message containing the result of channel search of the CPE to the base station. The automatic report message transmitting unit 1590 periodically transmits an automatic report message to the base station.

FIG. 16 is a block diagram of channel switching apparatuses 1600 and 1650 that are respectively included in a base station and a CPE of a cognitive radio system, according to another embodiment.

In an embodiment, referring to FIG. 16, the channel switching apparatus 1600, which is included in the base station for channel switching using implicit signaling, includes a detecting unit 1610 and a channel switching unit 1620.

The detecting unit 1610 detects a currently unavailable frequency channel from among at least one uplink/downlink frequency channel that is set as a communication channel together with the CPE.

If the uplink/downlink frequency channel between the base station and the CPE adopts the FDD system, a message that is to be received includes a channel search report message that the CPE transmits in response to a channel search request from the base station, and an automatic report message that the CPE periodically transmits to the base station. The detecting unit 1610 detects the first frequency channel, based on whether the channel search report message is received, the result of a channel search of the CPE, which is contained in the received channel search report message, and whether the automatic report message is received. If the uplink/downlink frequency channel between the base station and the CPE adopts the TDD system, the message that is to be received includes a channel search report message that the CPE transmits in response to a channel search request from the base station. The detecting unit 1610 detects the first frequency channel, based on whether the channel search report message is received and the result of the channel search of the CPE, which is contained in the received channel search report message.

The channel switching unit 1620 switches from the first frequency channel as a communication channel to a second frequency channel that is predefined together with the CPE.

The above operations of the detecting unit 1610 and the channel switching unit 1620 are related to channel switching using short implicit signaling. For channel switching using implicit signaling, the detecting unit 1610 delays determination regarding detection of the first frequency channel until a QP used for channel search, and detects the first frequency channel based on the result of the channel search, which is obtained after the QP. Similarly, the channel switching unit 1620 performs channel switching on the first frequency channel that has been finally detected after the QP.

In an embodiment, referring to FIG. 16, the channel switching apparatus 1650, which is included in the CPE for channel switching using implicit signaling, includes a detecting unit 1660 and a channel switching unit 1670.

The detecting unit 1660 detects a currently unavailable first frequency channel from among at least one uplink/downlink frequency channel that is set as a communication channel with the base station. The detecting unit 1660 may detect the first frequency channel, based on at least one of whether a message that is to be received is received and the result of the channel search of the CPE. Here, the message that is to be received, includes a MAP message containing information regarding a frequency channel allocated to the CPE, and a channel switching request message requesting channel switching.

The channel switching unit 1670 switches from the first frequency channel as a communication channel to a second frequency channel that is predefined with the base station.

The above operations of the detecting unit 1660 and the channel switching unit 1670 are related to channel, switching using short implicit signaling. For channel switching using implicit signaling, the detecting unit 1660 delays determination regarding detection of the first frequency channel until a QP for a channel search, and detects the first frequency channel based on the result of the channel search which is obtained after the QP. Similarly, the channel switching unit 1670 performs channel switching on the first frequency channel that is finally detected after the QP.

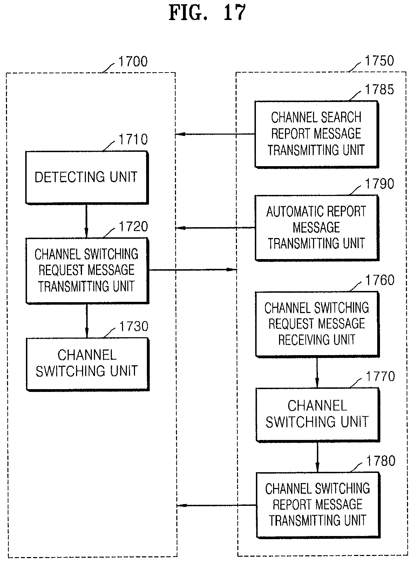

FIG. 17 is a block diagram of channel switching apparatuses 1700 and 1750 that are respectively included in a base station and a CPE of a cognitive radio system, according to another embodiment.

In an embodiment of the present invention, referring to FIG. 17, the channel switching apparatus 1700, which is included in the base station for channel switching using outband signaling, includes a detecting unit 1710, a channel switching request message transmitting unit 1720, and a channel switching unit 1730.

The detecting unit 1710 detects a currently unavailable first frequency channel from among at least one uplink/downlink frequency channel that is set as a communication channel with the CPE. The detecting unit 1710 may detect the first frequency channel, based on at least one of whether messages that are to be received are received and the result of the channel search from the base station. Here, if a channel search report message that the CPE transmits in response to a channel search request from the base station, and an automatic report message that the CPE periodically transmits to the base station are used as the messages that are to be received, the detecting unit 1710 detects the first frequency channel, based on whether the channel search report message is received, the result of channel searching received from the CPE, which is contained in the received channel search report message, and whether the automatic report message is received.

The channel switching request message transmitting unit 1720 transmits a channel switching request message requesting switching from the first frequency channel to the second frequency channel, to the CPE via an outband channel. Upon receiving from the CPE a channel switching report message reporting that channel switching is to be performed in response to the channel switching request message, the channel switching unit 1730 switches from the first frequency channel to the second frequency channel,

In an embodiment, referring to FIG. 17, the channel switching apparatus 1750, which is included in the CPE for channel switching using outband signaling, includes a channel switching request message receiving unit 1760, a channel switching unit 1770, a channel switching report message transmitting unit 1780, a channel search report message transmitting unit 1785, and an automatic report message transmitting unit 1790.

The channel switching request message receiving unit 1760 receives a channel switching request message requesting switching from the first frequency channel, which is a currently set communication channel, to the second frequency channel, from the base station via the outband channel.

The channel switching unit 1770 switches from the first frequency channel as a communication channel to the second frequency channel, based on the channel switching request message. The channel switching report message transmitting unit 1780 transmits a channel switching report message reporting that channel switching is to be performed in response to the channel switching request message, to the base station.

Upon receiving a channel search request message requesting a channel search from the base station, the channel search report message transmitting unit 1785 transmits a channel search report message containing the result of channel searching from the CPE to the base station. The automatic report message transmitting unit 1790 periodically transmits an automatic report message to the base station.

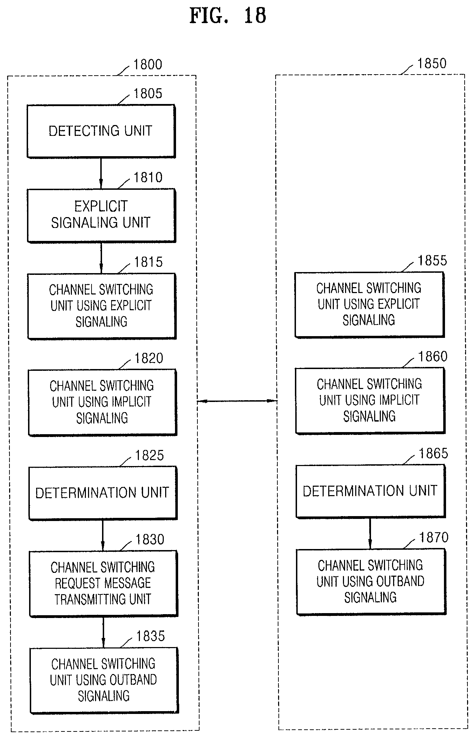

FIG. 18 is a block diagram of channel switching apparatuses 1800 and 1850 that are respectively included in a base station and a CPE of a cognitive radio system, according to an embodiment of the present invention.

In an embodiment of the present invention, referring to FIG. 18, the channel switching apparatus 1800, which is included in the base station for channel switching using sequential signaling described above with reference to FIG. 5, includes a detecting unit 1805, an explicit signaling unit 1810, a channel switching unit 1815 using explicit signaling, a channel switching unit 1820 using implicit signaling, a determination unit 1825, a channel switching request message transmitting unit 1830, and a channel switching unit 1835 using outband signaling.

The detecting unit 1805 detects a currently unavailable first frequency channel from among at least one uplink/downlink frequency channel that is set as a communication channel with the base station.

The explicit signaling unit 1810 transmits to the CPE a channel switching request message requesting switching from the first frequency channel to a second frequency channel, and waits to receive from the CPE a channel switching report message reporting that channel switching is to be performed in response to the channel switching request message.

Upon receiving the channel switching report message from the CPE, the channel switching unit 1815 using explicit signaling switches from the first frequency channel to the second frequency channel.

Upon not receiving the channel switching report message from the CPE, the channel switching unit 1820 using implicit signaling switches from the first frequency channel to a third frequency channel that is predefined with the CPE.

As illustrated in FIG. 18, the channel switching apparatus 1800 included in the base station further includes the determination unit 1825, the channel switching request message transmitting unit 1830, and the channel switching unit 1835 using outband signaling. In this case, upon not receiving the channel switching report message from the CPE, the determination unit 1825 determines whether an outband channel is available for the base station.

If it is determined that the outband channel is available, the channel switching request message transmitting unit 1830 transmits the channel switching request message to the CPE via the outband channel.

Upon receiving from the CPE a channel switching report message, which is a response to the channel switching request message transmitted via the outband, the channel switching unit 1835 using outband signaling switches from the first frequency channel to the second frequency channel.

In an embodiment of the present invention, referring to FIG. 18, the channel switching apparatus 1850, which is included in the CPE for channel switching using sequential signaling described above with reference to FIG. 5, includes a channel switching unit 1855 using explicit signaling, a channel switching unit 1860 using implicit signaling, a determination unit 1865, and a channel switching unit 1870 using outband signaling.

Upon receiving a channel switching request message requesting switching from a currently unavailable first frequency channel to a second frequency channel, from among at least one uplink/downlink frequency channel that is set as a communication channel with the base station, the channel switching unit 1855 that uses explicit signaling transmits a channel switching report message reporting that channel switching is to be performed in response to the channel switching request message, to the base station, and switches from the first frequency channel to the second frequency channel.

The channel switching unit 1860 that uses implicit signaling detects the unavailable first frequency channel based on whether messages that are to be received (including the channel switching request message) are received and the result of a channel search of the CPE, and switches the detected first frequency channel to a third frequency channel that is predefined with the base station.

As illustrated in FIG. 18, the channel switching apparatus 1850 included in the CPE further includes a determination unit 1865, and a channel switching unit 1870 using outband signaling. In this case, if the determination unit 1865 does not receive the messages that are to be received, the determination unit 1865 determines whether the channel switching request message is received via the outband channel. If it is determined that the channel switching request message is received via the outband channel, the channel switching unit 1870 that uses outband signaling switches from the first frequency channel to the second frequency channel and transmits a channel switching report message that is a response to the channel switching request message.

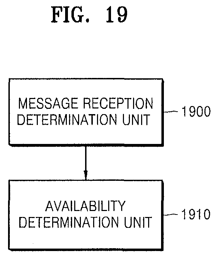

FIG. 19 is a block diagram of a frequency channel availability determination apparatus included in a base station of a cognitive radio system, according to an embodiment of the present invention. Referring to FIG. 19, the frequency channel availability determination apparatus includes a message reception determination unit 1900 and an availability determination unit 1910.

The message reception determination unit 1900 determines whether a channel search report message (a message that a CPE transmits in response to a channel search request from the base station) and an automatic report message (a message that the CPE periodically transmits to the base station) are received from the CPE.

The message reception determination unit 1910 determines whether an uplink/downlink frequency channel is available between the base station and the CPE, based on whether the channel search report message is received and whether the automatic report message is received. Here, the message reception determination unit 1910 determines that the uplink and downlink frequency channels are available when it is determined that the channel search report message is received, and that only the downlink frequency channel is not available when it is determined that only the automatic report message is received. Also, when it is determined that both the channel search report message and the automatic report message are not received, the message reception determination unit 1910 first determines that the uplink frequency channel is not available, and later detects whether there is also a problem with the downlink frequency channel by determining whether communication is re-established, using channel switching.

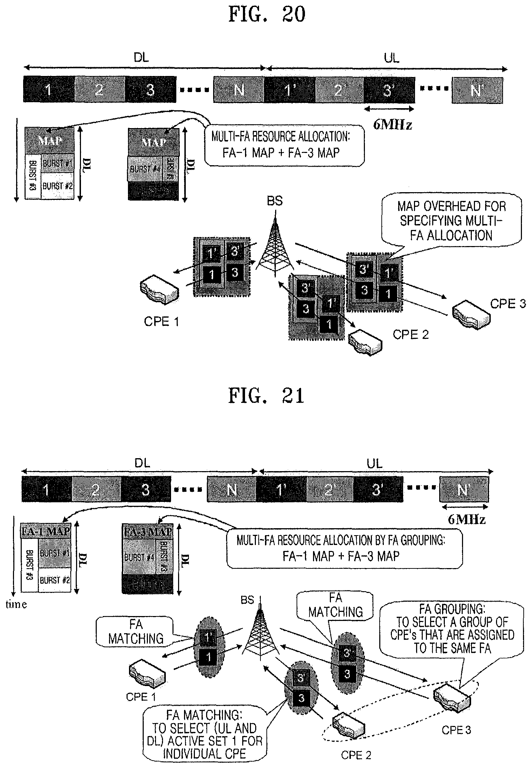

FIG. 20 is a diagram illustrating the concept of association of uplink and downlink frequency channels in a conventional FDD system. The OFDM/FDD system uses the uplink frequency channel and the downlink frequency channel that are different frequency channels. The relationship between the uplink frequency channel and the downlink frequency channel is specified in map (UL-MAP or DL-MAP) messages of the uplink and downlink frequency channel. In order to include the relationship into the MAP message, an identifier of the uplink frequency channel and an identifier of the downlink frequency channel must be included into the MAP message. Use of identification fields that are comparatively long not only causes waste of resources but also prevents frequency channel information from being systematically managed.

FIG. 21 is a diagram illustrating the concept of a method of managing uplink and downlink frequency channels in an OFDM.FDD system, according to an embodiment of the present invention. In detail, in an embodiment of the present invention, channel matching and channel grouping are used in a method of managing uplink and downlink frequency channels in OFDM.FDD system. In channel matching, matching information of frequency channels that are to be respectively used in an uplink and a downlink is set and provided to a base station and a CPE beforehand. For example, information about the uplink channel corresponding to channel number 1 and information about the downlink channel corresponding to channel number 1 may have been previously provided to a base station and a CPE. In this way, it is possible to allow each of the base station and the CPE to detect a channel matching its channel by simply using the channel number 1. Further, another CPE or another base station that does not use the channel to which the number 1 is assigned, can also detect the identifiers of channels corresponding to the number 1, which are respectively used in the uplink and the downlink. In other words, channel matching is performed in order to primarily manage and allow movement of the matched uplink and downlink frequency channels as a group. Further, it is possible to control two channels by using an identifier. Thus, it is possible to reduce the amount of information to be included into the MAP message as illustrated in FIG. 21, thereby generating the MAP message that reduces overhead.

In channel grouping, CPEs having the same channel matching information are managed together. In this case, CPEs belonging to the same group are grouped, based on the same channel information, geographical information, etc. When an incumbent user accesses a frequency channel belonging to a group, grouping of CPEs allows channel switching to be easily performed on all CPEs belonging to the group.

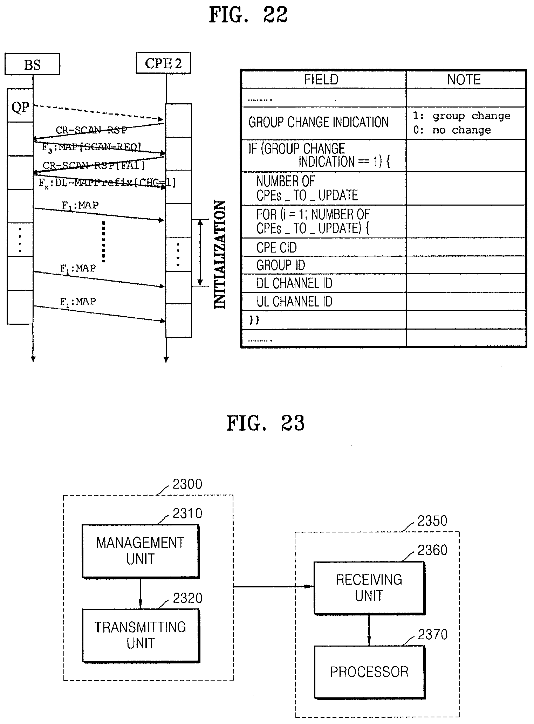

FIG. 22 illustrates a manner in which a base station transmits channel matching information and channel grouping information to a CPE, according to an embodiment of the present invention. The channel matching information and the channel grouping information are included in a frame prefix in a frame control header (FCH), as illustrated in FIG. 22.

A frame of a conventional system, such as a IEEE 802.16x system, is sequentially comprised of a preamble that facilitates signal detection, a FCH, a DL-MAP message, and a UL-MAP message. The CPE first detects a signal transmitted from a base station. The DL-MAP message that is obtained by detecting a base station that transmits a signal with the most appropriate power level, includes a base station identification (ID) field. The CPE detects a base station in order to receive a service therefrom, based on the base station ID field. Then, the CPE transmits information that is to be transmitted via an unlink, to an uplink channel defined in an uplink channel ID field contained in a UL-MAP message received from the detected base station.

According to the present invention, the channel matching information is included in the FCH, and is transmitted whenever channel switching occurs. Accordingly, it is possible to reduce the size of the MAP message more significantly than in a conventional method of recording channel information in the DL/UL-MAP message transmitted for each frame. Instead, according to the present invention, the channel matching information and the channel grouping information are transmitted to the FCH. That is, the channel matching information and the channel grouping information are transmitted only when a channel situation changes, thereby reducing the overall frame overhead.

FIG. 23 is a block diagram of an uplink/downlink frequency channel management apparatus 2300 included in a base station and an uplink/downlink frequency channel management apparatus 2350 included in a CPE, according to an embodiment of the present invention.

Referring to FIG. 23, the uplink/downlink frequency channel management apparatus 2300 included in the base station includes a management unit 2310 and a transmitting unit 2320. The uplink/downlink frequency channel management apparatus 2350 included in the CPE includes a receiving unit 2360 and a processor 2370.

The management unit 2310 groups an uplink frequency channel and a downlink frequency channel used by the same CPE as a pair, and generates and manages channel matching information regarding the pair.

The transmitting unit 2320 transmits the generated channel matching information to CPEs.

When the above channel grouping is adopted, the management unit 2310 divides CPEs into several groups according to an uplink/downlink frequency channel, and generates and manages channel group information that includes channel matching information and a CPE identifier of each of the groups. The transmitting unit 2320 transmits the generated channel group information to the CPEs.

The receiving unit 2360 receives the channel matching information or the channel group information from the base station. The processor 2370 performs an operation of a CPE that desires to obtain channel information in a cognitive radio system, based on the received channel matching information or the channel group information. An example of the operation of the CPE includes channel switching.

The present invention can be embodied as computer readable code in a computer readable medium. The computer readable medium may be any recording apparatus capable of storing data that is read by a computer system, e.g., a read-only memory (ROM), a random access memory (RAM), a compact disc (CD)-ROM, a magnetic tape, a floppy disk, an optical data storage device, and so on. Also, the computer readable medium may be a carrier wave that transmits data via the Internet, for example. The computer readable medium can be distributed among computer systems that are interconnected through a network, and the present invention may be stored and implemented as computer readable code in the distributed system. Also, a functional program, code, and code segments required to perform the present invention can be easily derived by programmers skilled in the technical field to which the invention pertains.

While this invention has been particularly shown and described with reference to preferred embodiments thereof, it will be understood by those skilled in the art that various changes in form and details may be made therein without departing from the scope of the invention as defined by the appended claims.

## Claims

1. A channel switching method performed by a base station in a cognitive radio system, the method comprising: detecting a currently unavailable first frequency channel from among at least one uplink/downlink frequency channel which is set as a communication channel with customer premises equipment (̵CPE)̵; performing explicit signaling in which a channel switching request message requesting switching from the first frequency channel to a second frequency channel is transmitted to the CPE, and waiting for a channel switching report message that reports that channel switching is to be performed in response to the channel switching request message to be received from the CPE; upon receiving the channel switching report message from the CPE, performing channel switching from the first frequency channel to the second frequency channel, using explicit signaling; and when the channel switching report message is not received from the CPE, using implicit signaling, comprising channel switching from the first frequency channel to a third frequency channel which is predefined with the CPE.

2. The channel switching method of claim 1, further comprising: when the channel switching report message is not received from the CPE, determining whether an outband channel is available for the base station; when it is determined that the outband channel is available, transmitting the channel switching request message to the CPE via the outband channel; and when a channel switching report message, which is a response to the channel switching request message transmitted via the outband channel., is received from the CPE, performing channel switching from the first frequency channel to the second frequency channel, using outband signaling, wherein the performing of channel switching using implicit signaling comprises switching from the first frequency channel to the third frequency channel, when it is determined that the outband channel is not available or when the channel switching report message, which is a response to the channel switching request message transmitted via the outband channel, is not received from the CPE.

3. The channel switching method of claim 1, wherein the uplink/downlink frequency channel between the base station and the CPE uses a frequency division duplex system, and the detecting of the first frequency channel comprises: operating a T1 timer when the result of a channel search reveals that an incumbent user accesses the downlink frequency channel, a T2 timer when the result of the channel search reveals that the incumbent user accesses the uplink frequency channel, and a T3 timer when the result of the channel search reveals that the incumbent user does not access both the uplink and downlink frequency channels; and detecting the first frequency channel, based on whether a channel search report message, which is transmitted from the CPE in response to a channel search request from the base station, is received, the result of a channel search performed by the CPE, which is contained in the received channel search report message, whether an automatic report message, which is periodically transmitted from the CPE to the base station, is received, and the result of the channel search performed by the base station.

4. The channel switching method of claim 3, wherein the detecting of the first frequency channel determining the downlink frequency channel as the first frequency channel, when the channel search report message is received and it is determined that the incumbent user accesses the downlink frequency channel based on the result of the channel search of the base station and the result of the channel search of the CPE, which is contained in the received channel search report message, or when the channel search report message is not received and the automatic report message is received, and the performing of channel switching using implicit signaling comprises switching from the first frequency channel to a third frequency channel, which is predefined with the CPE, when the channel switching report message is not received from the CPE until a timeout.

5. The channels switching method of claim 3, wherein the detecting of the first frequency channel comprises detecting the uplink frequency channel as the first frequency channel when both the channel search report message and the automatic report message are received, and the performing of channel switching using implicit signaling comprises switching from the first frequency channel to a third frequency channel which is predefined with the CPE, when the channel switching report message is not received from the CPE until a timeout of the T2 timer.

6. The channel switching method of claim 3, wherein the detecting of the first frequency channel comprises determining the uplink frequency channel as the first frequency channel when both the channel search report message and the automatic report message are received, and the performing of channel switching using implicit signaling comprises switching from the first frequency channel to a third frequency channel which is predefined with the CPE, when the channel switching report message is not received from the CPE until a timeout of the T2 timer.

7. The channel switching method of claim 6, further comprising, when communication is not re-established with the CPE before a timeout of the T3 timer although the first frequency channel is switched to the predefined third frequency channel, switching a current uplink/downlink frequency channel to a uplink/downlink frequency channel that is predefined with the CPE, after a quiet period used for channel searching.

8. The channel switching method of claim 1, wherein the uplink/downlink frequency channel between the base station and the CPE uses a time division duplex system, and the detecting of the first frequency channel comprises: performing a channel search in which a T1 timer operates when the result of a channel search reveals that an incumbent user accesses the uplink/downlink frequency channel, and a T2 timer operates when the result of the channel search reveals that the incumbent user does not access the uplink/downlink frequency channel; and detecting the first frequency channel, based on whether a channel search report message that the CPE transmits in response to a channel search request from the base station is received, the result of a channel search performed by the CPE, which is included in the received channel search report message, and the result of the channel search performed by the base station.

9. The channel switching method of claim 8, wherein the detecting of the first frequency channel comprises determining the current uplink/downlink frequency channel as the first frequency channel when access of the incumbent user is not detected during the channel search or when the channel search report message is not received.

10. The channel switching method of claim 8, wherein the performing of channel switching using implicit signaling comprises switching from the first frequency channel to a third frequency channel which is predefined with the CPE, when the channel switching report message is not received within a timeout of the T1 timer or the T2 timer from the CPE.

11. A channel switching method performed by customer premises equipment (̵CPE)̵ in a cognitive radio system, the method comprising: performing channel switching using explicit signaling, in which, when receiving a channel switching request message requesting switching from a currently unavailable first frequency channel to a second frequency channel from among at least one uplink/downlink frequency channel which is set as a communication channel with a base station, a channel switching report message reporting which channel switching is to be performed in response to the channel switching request message is transmitted to the base station and the first frequency channel is switched to the second frequency channel; and performing channel switching using implicit signaling, in which the currently unavailable first frequency channel is detected based on whether messages that are to be received, including the channel switching request message, are received and the result of a channels search performed by the CPE; and the detected first frequency channel is switched to a third frequency channel which is predefined with the base station.

12. The channel switching method of claim 11, further comprising: when the messages that are to be received, are not received, determining whether the channel switching request message is received via an outband channel; and performing channel switching using outband signaling, in which the first frequency channel is switched to the second frequency channel, and a channel switching report message, which is a response to the channel switching request message, is transmitted when it is determined that the channel switching request message is received via the outband channel, wherein the channel switching using implicit signaling is performed when it is determined that the channel switching request message is not received via the outband channel.

13. The channel switching method of claim 11, wherein the uplink/downlink frequency channel between the base station and the CPE uses a frequency division duplex system, the channel switching method further comprising performing a channel search in which a T4 timer operates when the result of a channel search reveals that an incumbent user accesses the downlink frequency channel, a T5 timer operates when the result of channel search reveals that the incumbent user accesses the uplink frequency channel, and a T6 timer operates when the result of the channel search reveals that the incumbent user does not access both the uplink and downlink frequency channels, wherein the channel switching using implicit signaling comprises determining the downlink frequency channel as the first frequency channel and switching from the first frequency channel to a third frequency channel which is predefined with the base station, when it is determined during the channel search that the incumbent user does not access the uplink frequency channel, and a MAP message containing information regarding a frequency channel allocated to the CPE and the channel switching request message are not received within a timeout of the T4 timer or the T6 timer.

14. The channel switching method of claim 11, wherein the uplink/downlink frequency channel between the base station and the CPE uses a time division duplex system, the channel switching method further comprising performing a channel search in which a T4 timer operates when the result of the channel search reveals that an incumbent user accesses the downlink frequency channel, a T5 timer operates when the result of the channel search reveals that the incumbent user accesses the uplink frequency channel, and a T6 timer operates when the result of the channel search reveals that the incumbent user does not access both the uplink and downlink frequency channels, wherein the channel switching using implicit signaling comprises determining the uplink frequency channel as the first frequency channel and switching from the first frequency channel to a third frequency channel which is predefined with the base station, when it is determined during the channel search that the incumbent user accesses the uplink frequency channel, and a MAP message containing information regarding a frequency channel allocated to the CPE and the channel switching request message are not received within a timeout of the T5 timer.

15. The channel switching method of claim 14, further comprising, when communication is not re-established with the base station within a timeout of the T6 timer although the first frequency channel is switched to the predefined third frequency channel, switching a current uplink/downlink frequency channel to a uplink/downlink frequency channel which is predefined with the CPE, after a quiet period used for channel searching.

16. The channel switching method of claim 11, wherein the uplink/downlink frequency channel between the base station and the CPE uses a time division duplex system, the channel switching method further comprising performing a channel search in which a T3 timer operates when the result of the channel search reveals that an incumbent user accesses the uplink/downlink frequency channel and a T4 timer operates when the result of the channel search reveals that the incumbent user does not access the uplink/downlink frequency channel, wherein the channel switching using implicit signaling comprises switching from the uplink/downlink frequency channel to a frequency channel, which is predefined with the base station, when the channel switching request message is not received within a timeout of the T3 timer or the T4 timer, if it is determined during the channel search that the incumbent user does not access the uplink/downlink frequency channel but a MAP message containing information regarding a frequency channel allocated to the CPE is not received, or that the incumbent user accesses the uplink/downlink frequency channel.

17. A channel switching apparatus included in a base station of a cognitive radio system, the apparatus **(1800)** comprising: a detecting unit **(1805)** adapted to detect a currently unavailable first frequency channel from among at least one uplink/downlink frequency channel which is set as a communication channel with customer premises equipment (̵CPE)̵; an explicit signaling unit **(1810)** adapted to transmit a channel switching request message requesting switching from the first frequency channel to a second frequency channel to the CPE, and waiting to receive from the CPE a channel switching report message that reports that channel switching is to be performed in response to the channel switching request message; **an explicit signaling** channel switching unit **(1815)** adapted to switch from first frequency channel to the second frequency channel by using explicit signaling, when receiving the channel switching report message from the CPE; and **an implicit signaling** channel switching unit **(1820)** adapted to switch from the first frequency channel to a third frequency channel, which is predefined with the CPE, when the **implicit signaling** channel switching unit **(1815)** does not receive the channel switching report message from the CPE.

18. The channel switching apparatus of claim 17, further comprising: a determination unit **(1825)** determining whether an outband channel is available for the base station when the determination unit does not receive the channel switching report message from the CPE; a channel switching request message transmitting unit **(1830)** transmitting the channel switching request message to the CPE via the outband channel, when it is determined that the outband channel is available; and an **outband signaling** channel switching unit **(1835)** switching from the first frequency channel to the second frequency channel by using outband signaling, when receiving a channel switching report message, which is a response to the channel switching request message transmitted via the outband, from the CPE, wherein the **implicit signaling** channel switching unit **(1820)** using implicit signaling switches from the first frequency channel to the third frequency channel, when the determination unit **(1825)** determines that the outband channel is not available or when the channel switching report message, which is a response to the channel switching request message transmitted via the outband, is not received from the CPE.

19. A channel switching apparatus included in customer premises equipment (̵CPE)̵ of a cognitive radio system, the apparatus **(1850)** comprising: **an explicit signaling** channel switching unit **(1855)** adapted to transmit to a base station a channel switching report message that reports that channel switching is to be performed in response to a channel switching request message, and adapted to switch from a first frequency channel to a second frequency channel by using explicit signaling, when receiving the channel switching request message requesting switching the first frequency channel, which is currently unavailable, to the second frequency channel from among at least one uplink/downlink frequency channel which is set as a communication channel with the base station; and **an implicit signaling** channel switching unit **(1860)** adapted to detect the currently unavailable frequency channel, based on whether messages that are to be received, including the channel switching request message, are received and the result of a channel search performed by the CPE, and switching the detected first frequency channel to a third frequency channel which is predefined with the base station.

20. The apparatus of claim 19, further comprising: a determination unit **(1865)** determining whether the channel switching request message is received via an outband channel when the determination unit **(1865)** does not receive the messages that are to be received; and **an outband signaling** channel switching unit **(1870)** switching from the first frequency channel to the second frequency channel and transmitting a channel switching report message, which is a response to the channel switching request message, by using outband signaling, when it is determined that the channel switching request message is received via the outband channel, wherein the **implicit signaling** channel switching unit **(1860)** using implicit signaling performs channel switching using implicit signaling when it is determined that the channel switching request message is not received via the outband channel.

## Patentansprüche

1. Kanalschaltverfahren, das von einer Basisstation in einem kognitiven Funksystem ausgeführt wird, wobei das Verfahren Folgendes umfasst: Detektieren eines aktuell nicht verfügbaren ersten Frequenzkanals unter wenigstens einem Aufwärtsstrecken/Abwärtsstrecken-Frequenzkanal, der als ein Kommunikationskanal mit Kundenräumlichkeitsausrüstung (CPE) eingestellt ist; Ausführen einer expliziten Signalgebung, in der eine Kanalschaltanforderungsnachricht, die ein Schalten von dem ersten Frequenzkanal zu einem zweiten Frequenzkanal anfordert, an die CPE übertragen wird, und Warten auf den Empfang von der CPE einer Kanalschaltberichtsnachricht, die berichtet, dass das Kanalschalten in Reaktion auf die Kanalschaltanforderungsnachricht auszuführen ist; bei Empfang der Kanalschaltberichtsnachricht von der CPE Ausführen eines Kanalschaltens von dem ersten Frequenzkanal zu dem zweiten Frequenzkanal unter Verwendung der expliziten Signalgebung; und dann, wenn die Kanalschaltberichtsnachricht von der CPE nicht empfangen wird, Verwenden einer impliziten Signalgebung, die ein Kanalschalten von dem ersten Frequenzkanal zu einem dritten Frequenzkanal, der in der CPE im Voraus definiert worden ist, umfasst.

2. Kanalschaltverfahren nach Anspruch 1, das ferner Folgendes umfasst: wenn die Kanalschaltberichtsnachricht von der CPE nicht empfangen wird, Bestimmen ob ein Außerbandkanal für die Basisstation verfügbar ist; wenn bestimmt wird, dass der Außerbandkanal verfügbar ist, Übertragen der Kanalschaltanforderungsnachricht über den Außerbandkanal an die CPE; und wenn eine Kanalschaltberichtsnachricht, die eine Antwort auf die über den Außerbandkanal übertragene Kanalschaltanforderungsnachricht ist, von der CPE empfangen wird, Ausführen eines Kanalschaltens von dem ersten Frequenzkanal zu dem zweiten Frequenzkanal unter Verwendung einer Außerbandsignalgebung, wobei das Ausführen des Kanalschaltens unter Verwendung der impliziten Signalgebung das Schalten von dem ersten Frequenzkanal zu dem dritten Frequenzkanal umfasst, wenn bestimmt wird, dass der Außerbandkanal nicht verfügbar ist, oder wenn die Kanalschaltberichtsnachricht, die eine Antwort auf die über den Außerbandkanal übertragene Kanalschaltanforderungsnachricht ist, von der CPE nicht empfangen wird.

3. Kanalschaltverfahren nach Anspruch 1, wobei der Aufwärtsstrecken/Abwärtsstrecken-Frequenzkanal zwischen der Basisstation und der CPE ein Frequenzduplexsystem verwendet und das Detektieren des ersten Frequenzkanals Folgendes umfasst: Betreiben eines T1-Zeitgebers, wenn das Ergebnis einer Kanalsuche offenbart, dass ein etablierter Anwender auf den Abwärtsstrecken-Frequenzkanal zugreift, und Betreiben eines T2-Zeitgebers, wenn das Ergebnis der Kanalsuche offenbart, dass der etablierte Anwender auf den Aufwärtsstrecken-Frequenzkanal zugreift, und Betreiben eines T3-Zeitgebers, wenn das Ergebnis der Kanalsuche offenbart, dass der etablierte Anwender weder auf den Aufwärtsstrecken- noch auf den Abwärtsstrecken-Frequenzkanal zugreift; und Detektieren des ersten Frequenzkanals anhand der Tatsache, ob eine Kanalsuchberichtsnachricht, die von der CPE in Reaktion auf eine Kanalsuchanforderung von der Basisstation übertragen wird, empfangen wird, anhand des Ergebnisses einer Kanalsuche, die durch die CPE ausgeführt wird, das in der empfangenen Kanalsuchberichtsnachricht enthalten ist, anhand der Tatsache, ob eine automatische Berichtsnachricht, die von der CPE periodisch an die Basisstation übertragen wird, empfangen wird, und anhand des Ergebnisses der Kanalsuche, die durch die Basisstation ausgeführt wird.

4. Kanalschaltverfahren nach Anspruch 3, wobei das Detektieren des ersten Frequenzkanals den Abwärtsstrecken-Frequenzkanal als den ersten Frequenzkanal bestimmt, wenn die Kanalsuchberichtsnachricht empfangen wird und anhand des Ergebnisses der Kanalsuche der Basisstation und des Ergebnisses der Kanalsuche der CPE, die in der empfangenen Kanalsuchberichtsnachricht enthalten ist, bestimmt wird, dass der etablierte Anwender auf den Abwärtsstrecken-Frequenzkanal zugreift, oder wenn die Kanalsuchberichtsnachricht nicht empfangen wird und die automatische Berichtsnachricht empfangen wird, und wobei das Ausführen des Kanalschaltens unter Verwendung der impliziten Signalgebung das Schalten von dem ersten Frequenzkanal zu einem dritten Frequenzkanal umfasst, der in der CPE im Voraus definiert worden ist, wenn die Kanalschaltberichtsnachricht von der CPE bis zu einem Zeitüberlauf nicht empfangen wird.

5. Kanalschaltverfahren nach Anspruch 3, wobei das Detektieren des ersten Frequenzkanals das Detektieren des Aufwärtsstrecken-Frequenzkanals als den ersten Frequenzkanal umfasst, wenn sowohl die Kanalsuchberichtsnachricht als auch die automatische Berichtsnachricht empfangen werden, und das Ausführen des Kanalschaltens unter Verwendung der impliziten Signalgebung das Schalten von dem ersten Frequenzkanal zu einem dritten Frequenzkanal umfasst, der in der CPE im Voraus definiert worden ist, wenn die Kanalschaltberichtsnachricht von der CPE bis zu einem Zeitüberlauf des T2-Zeitgebers nicht empfangen wird.

6. Kanalschaltverfahren nach Anspruch 3, wobei das Detektieren des ersten Frequenzkanals das Bestimmen des Aufwärtsstrecken-Frequenzkanals als den ersten Frequenzkanal umfasst, wenn sowohl die Kanalsuchberichtsnachricht als auch die automatische Berichtsnachricht empfangen werden, und das Ausführen des Kanalschaltens, das die implizite Signalgebung verwendet, das Schalten von dem ersten Frequenzkanal zu einem dritten Frequenzkanal umfasst, der in der CPE im Voraus definiert worden ist, wenn die Kanalschaltberichtsnachricht von der CPE bis zu einem Zeitüberlauf des T2-Zeitgebers nicht empfangen wird.

7. Kanalschaltverfahren nach Anspruch 6, das ferner dann, wenn eine Kommunikation mit der CPE vor einem Zeitüberlauf des T3-Zeitgebers nicht erneut hergestellt wird, obwohl der erste Frequenzkanal zu dem im Voraus definierten dritten Frequenzkanal umgeschaltet wird, das Schalten eines aktuellen Aufwärtsstrecken/Abwärtsstrecken-Frequenzkanals zu einem Aufwärtsstrecken/Abwärtsstrecken-Frequenzkanal, der in der CPE im Voraus definiert ist, umfasst, wenn eine Ruheperiode, die für die Kanalsuche verwendet wird, verstrichen ist.

8. Kanalschaltverfahren nach Anspruch 1, wobei der Aufwärtsstrecken/Abwärtsstrecken-Frequenzkanal zwischen der Basisstation und der CPE ein Zeitduplexsystem verwendet und das Detektieren des ersten Frequenzkanals Folgendes umfasst: Ausführen einer Kanalsuche, in der ein T1-Zeitgeber betrieben wird, wenn das Ergebnis einer Kanalsuche offenbart, dass ein etablierter Anwender auf den Aufwärtsstrecken/Abwärtsstrecken-Frequenzkanal zugreift, und ein T2-Zeitgeber betrieben wird, wenn das Ergebnis der Kanalsuche offenbart, dass der etablierte Anwender nicht auf den Aufwärtsstrecken/Abwärtsstrecken-Frequenzkanal zugreift; und Detektieren des ersten Frequenzkanals anhand der Tatsache, ob eine Kanalsuchberichtsnachricht, die die CPE in Reaktion auf eine Kanalsucheanforderung von der Basisstation überträgt, empfangen wird, anhand des Ergebnisses einer Kanalsuche, die durch die CPE ausgeführt wird, das in der empfangenen Kanalsuchberichtsnachricht enthalten ist, und anhand des Ergebnisses der Kanalsuche, die durch die Basisstation ausgeführt wird.

9. Kanalschaltverfahren nach Anspruch 8, wobei das Detektieren des ersten Frequenzkanals das Bestimmen des aktuellen Aufwärtsstrecken/Abwärtsstrecken-Frequenzkanals als den ersten Frequenzkanal umfasst, wenn der Zugriff des etablierten Anwenders während der Kanalsuche nicht detektiert wird oder wenn die Kanalsuchberichtsnachricht nicht empfangen wird.

10. Kanalschaltverfahren nach Anspruch 8, wobei das Ausführen des Kanalschaltens unter Verwendung der impliziten Signalgebung das Schalten von dem ersten Frequenzkanal zu einem dritten Frequenzkanal umfasst, der in der CPE im Voraus definiert worden ist, wenn die Kanalschaltberichtsnachricht innerhalb eines Zeitablaufs des T1-Zeitgebers oder des T2-Zeitgebers von der CPE nicht empfangen wird.

11. Kanalschaltverfahren, das von einer Kundenräumlichkeitsausrüstung (CPE) in einem kognitiven Funksystem ausgeführt wird, wobei das Verfahren Folgendes umfasst: Ausführen eines Kanalschaltens unter Verwendung einer expliziten Signalgebung, in der dann, wenn eine Kanalschaltanforderungsnachricht empfangen wird, die ein Schalten von einem aktuell nicht verfügbaren ersten Frequenzkanal zu einem zweiten Frequenzkanal unter wenigstens einem Aufwärtsstrecken/Abwärtsstrecken-Frequenzkanal, der als ein Kommunikationskanal mit einer Basisstation eingestellt ist, eine Kanalschaltberichtsnachricht, die berichtet, welches Kanalschalten in Reaktion auf die Kanalschaltanforderungsnachricht auszuführen ist, an die Basisstation übertragen wird und der erste Frequenzkanal zu dem zweiten Frequenzkanal geschaltet wird; und Ausführen eines Kanalschaltens unter Verwendung einer impliziten Signalgebung, in dem der aktuell nicht verfügbare erste Frequenzkanal anhand der Tatsache, ob Nachrichten, die empfangen werden sollen und die Kanalschaltanforderungsnachricht enthalten, empfangen werden, und anhand des Ergebnisses einer Kanalsuche, die durch die CPE ausgeführt wird, detektiert wird; und der detektierte erste Frequenzkanal zu einem dritten Frequenzkanal geschaltet wird, der in der Basisstation im Voraus definiert worden ist.

12. Kanalschaltverfahren nach Anspruch 11, das ferner Folgendes umfasst: wenn die Nachrichten, die empfangen werden sollen, nicht empfangen werden, Bestimmen, ob die Kanalschaltanforderungsnachricht über einen Außerbandkanal empfangen wird; und Ausführen eines Kanalschaltens unter Verwendung einer Außerbandsignalgebung, in der der erste Frequenzkanal zu dem zweiten Frequenzkanal geschaltet wird, und eine Kanalschaltberichtsnachricht, die eine Antwort auf die Kanalschaltanforderungsnachricht ist, übertragen wird, wenn bestimmt wird, dass die Kanalschaltanforderungsnachricht über den Außerbandkanal empfangen wird, wobei das Kanalschalten, das die implizite Signalgebung verwendet, ausgeführt wird, wenn bestimmt wird, dass die Kanalschaltanforderungsnachricht über den Außerbandkanal nicht empfangen wird.

13. Kanalschaltverfahren nach Anspruch 11, wobei der Aufwärtsstrecken/Abwärtsstrecken-Frequenzkanal zwischen der Basisstation und der CPE ein Frequenzduplexsystem verwendet und wobei das Kanalschaltverfahren ferner Folgendes umfasst: Ausführen einer Kanalsuche, in der ein T4-Zeitgeber betrieben wird, wenn das Ergebnis einer Kanalsuche offenbart, dass ein etablierter Anwender auf den Abwärtsstrecken-Frequenzkanal zugreift, ein T5-Zeitgeber betrieben wird, wenn das Ergebnis einer Kanalsuche offenbart, dass der etablierte Anwender auf den Aufwärtsstrecken-Frequenzkanal zugreift, und ein T6-Zeitgeber betrieben wird, wenn das Ergebnis der Kanalsuche offenbart, dass der etablierte Anwender weder auf den Aufwärtsstrecken- noch auf den Abwärtsstrecken-Frequenzkanal zugreift, wobei das Kanalschalten, das eine implizite Signalgebung verwendet, Folgendes umfasst: Bestimmen des Abwärtsstrecken-Frequenzkanals als den ersten Frequenzkanal und Schalten von dem ersten Frequenzkanal zu einem dritten Frequenzkanal, der in der Basisstation im Voraus definiert worden ist, wenn während der Kanalsuche bestimmt wird, dass der etablierte Anwender nicht auf den Aufwärtsstrecken-Frequenzkanal zugreift und eine MAP-Nachricht, die Informationen bezüglich eines der CPE zugewiesenen Frequenzkanals enthält, und die Kanalschaltanforderungsnachricht innerhalb eines Zeitablaufs des T4-Zeitgebers oder des T6-Zeitgebers nicht empfangen werden.

14. Kanalschaltverfahren nach Anspruch 11, wobei der Aufwärtsstrecken/Abwärtsstrecken-Frequenzkanal zwischen der Basisstation und der CPE ein Zeitduplexsystem verwendet und das Kanalschaltverfahren ferner Folgendes umfasst: Ausführen einer Kanalsuche, in der ein T4-Zeitgeber betrieben wird, wenn das Ergebnis der Kanalsuche offenbart, dass ein etablierter Anwender auf den Abwärtsstrecken-Frequenzkanal zugreift, ein T5-Zeitgeber betrieben wird, wenn das Ergebnis der Kanalsuche offenbart, dass der etablierte Anwender auf den Aufwärtsstrecken-Frequenzkanal zugreift, und ein T6-Zeitgeber betrieben wird, wenn das Ergebnis der Kanalsuche offenbart, dass der etablierte Anwender weder auf den Aufwärtsstrecken- noch auf den Abwärtsstrecken-Frequenzkanal zugreift, wobei das Kanalschalten, das die implizite Signalgebung verwendet, das Bestimmen des Aufwärtsstrecken-Frequenzkanals als den ersten Frequenzkanal und das Schalten von dem ersten Frequenzkanal zu einem dritten Frequenzkanal, der in der Basisstation im Voraus definiert worden ist, umfasst, wenn während der Kanalsuche bestimmt wird, dass der etablierte Anwender auf den Aufwärtsstrecken-Frequenzkanal zugreift und eine MAP-Nachricht, die Informationen bezüglich eines der CPE zugewiesenen Frequenzkanals enthält, und die Kanalschaltanforderungsnachricht innerhalb eines Zeitablaufs des T5-Zeitgebers nicht empfangen werden.

15. Kanalschaltverfahren nach Anspruch 14, das ferner Folgendes umfasst: wenn eine Kommunikation in der Basisstation innerhalb eines Zeitablaufs des T6-Zeitgebers nicht erneut hergestellt wird, obwohl der erste Frequenzkanal zu dem im Voraus definierten dritten Frequenzkanal geschaltet wird, Schalten eines aktuellen Aufwärtsstrecken/-Abwärtsstrecken-Frequenzkanals zu einem Aufwärtsstrecken/Abwärtsstrecken-Frequenzkanal, der in der CPE im Voraus definiert worden ist, nachdem eine Ruheperiode, die für die Kanalsuche verwendet wird, verstrichen ist.

16. Kanalschaltverfahren nach Anspruch 11, wobei der Aufwärtsstrecken/Abwärtsstrecken-Frequenzkanal zwischen der Basisstation und der CPE ein Zeitduplexsystem verwendet und das Kanalschaltverfahren ferner Folgendes umfasst: Ausführen einer Kanalsuche, in der ein T3-Zeitgeber betrieben wird, wenn das Ergebnis der Kanalsuche offenbart, dass ein etablierter Anwender auf den Aufwärtsstrecken/Abwärtsstrecken-Frequenzkanal zugreift, und ein T4-Zeitgeber betrieben wird, wenn das Ergebnis der Kanalsuche offenbart, dass der etablierte Anwender nicht auf den Aufwärtsstrecken/Abwärtsstrecken-Frequenzkanal zugreift, wobei das Kanalschalten, das eine implizite Signalgebung verwendet, das Schalten von dem Aufwärtsstrecken/Abwärtsstrecken-Frequenzkanal zu einem Frequenzkanal, der in der Basisstation im Voraus definiert worden ist, umfasst, wenn die Kanalschaltanforderungsnachricht innerhalb eines Zeitablaufs des T3-Zeitgebers oder des T4-Zeitgebers nicht empfangen wird, falls während der Kanalsuche bestimmt wird, dass der etablierte Anwender nicht auf den Aufwärtsstrecken/Abwärtsstrecken-Frequenzkanal zugreift, jedoch eine MAP-Nachricht, die Informationen bezüglich eines der CPE zugewiesenen Frequenzkanals enthält, nicht empfangen wird, oder dass der etablierte Anwender auf den Aufwärtsstrecken/Abwärtsstrecken-Frequenzkanal zugreift.

17. Kanalschaltvorrichtung, die in einer Basisstation eines kognitiven Funksystems enthalten ist, wobei die Vorrichtung (1800) Folgendes umfasst: eine Detektionseinheit (1805), die dafür ausgelegt ist, einen aktuell nicht verfügbaren ersten Frequenzkanal unter wenigstens einem Aufwärtsstrecken/Abwärtsstrecken-Frequenzkanal, der als ein Kommunikationskanal mit einer Kundenräumlichkeitsausrüstung (CPE) eingestellt ist, zu detektieren; eine Einheit (1810) zur expliziten Signalgebung, die dafür ausgelegt ist, eine Kanalschaltanforderungsnachricht, die ein Schalten von dem ersten Frequenzkanal zu einem zweiten Frequenzkanal anfordert, an die CPE zu übertragen und auf den Empfang einer Kanalschaltantwortnachricht von der CPE, die berichtet, dass das Kanalschalten in Reaktion auf die Kanalschaltanforderungsnachricht auszuführen ist, wartet; eine Kanalschalteinheit (1815) mit expliziter Signalgebung, die dafür ausgelegt ist, von dem ersten Frequenzkanal zu dem zweiten Frequenzkanal unter Verwendung einer expliziten Signalgebung zu schalten, wenn die Kanalschaltberichtsnachricht von der CPE empfangen wird; und eine Kanalschalteinheit (1820) mit impliziter Signalgebung, die dafür ausgelegt ist, von dem ersten Frequenzkanal zu einem dritten Frequenzkanal, der in der CPE im Voraus definiert worden ist, zu schalten, wenn die Kanalschalteinheit (1815) mit impliziter Signalgebung die Kanalschaltberichtsnachricht von der CPE nicht empfängt.

18. Kanalschaltvorrichtung nach Anspruch 17, die ferner Folgendes umfasst: eine Bestimmungseinheit (1825), die bestimmt, ob ein Außerbandkanal für die Basisstation verfügbar ist, wenn die Bestimmungseinheit die Kanalschaltberichtsnachricht von der CPE nicht empfängt; eine Kanalschaltanforderungsnachricht-Übertragungseinheit (1830), die die Kanalschaltanforderungsnachricht über den Außerbandkanal an die CPE überträgt, wenn bestimmt wird, dass der Außerbandkanal verfügbar ist; und eine Außerbandsignalgebungs-Kanalschalteinheit (1835), die von dem ersten Frequenzkanal zu dem zweiten Frequenzkanal unter Verwendung der Außerbandsignalgebung schaltet, wenn eine Kanalschaltberichtsnachricht, die eine Antwort auf die über das Außerband übertragene Kanalschaltanforderungsnachricht ist, von der CPE empfangen wird, wobei die Kanalschalteinheit (1820) zur impliziten Signalgebung, die eine implizite Signalgebung verwendet, von dem ersten Frequenzkanal zu dem dritten Frequenzkanal schaltet, wenn die Bestimmungseinheit (1825) bestimmt, dass der Außerbandkanal nicht verfügbar ist, oder wenn die Kanalschaltberichtsnachricht, die eine Antwort auf die über das Außerband übertragene Kanalschaltanforderungsnachricht ist, von der CPE nicht empfangen wird.

19. Kanalschaltvorrichtung, die in einer Kundenräumlichkeitsausrüstung (CPE) eines kognitiven Funksystems enthalten ist, wobei die Vorrichtung (1850) Folgendes umfasst: eine Kanalschalteinheit (1855) zur expliziten Signalgebung, die dafür ausgelegt ist, eine Kanalschaltberichtsnachricht, die berichtet, dass ein Kanalschalten in Reaktion auf eine Kanalschaltanforderungsnachricht auszuführen ist, an eine Basisstation zu übertragen, und dafür ausgelegt ist, von einem ersten Frequenzkanal zu einem zweiten Frequenzkanal unter Verwendung einer expliziten Signalgebung zu schalten, wenn die Kanalschaltanforderungsnachricht, die ein Schalten des ersten Frequenzkanals, der aktuell nicht verfügbar ist, zu dem zweiten Frequenzkanal unter wenigstens einem Aufwärtsstrecken/Abwärtsstrecken-Frequenzkanal, der als ein Kommunikationskanal mit der Basisstation eingestellt ist, anfordert, empfangen wird; und eine Kanalschalteinheit (1860) zur impliziten Signalgebung, die dafür ausgelegt ist, anhand der Tatsache, ob zu empfangende Nachrichten, die die Kanalschaltanforderungsnachricht enthalten, empfangen werden, und anhand des Ergebnisses einer Kanalsuche, die durch die CPE ausgeführt wird, den aktuell nicht verfügbaren Frequenzkanal zu detektieren und den detektierten ersten Frequenzkanal zu einem dritten Frequenzkanal, der in der Basisstation im Voraus definiert worden ist, zu schalten.

20. Vorrichtung nach Anspruch 19, die ferner Folgendes umfasst: eine Bestimmungseinheit (1865), die bestimmt, ob eine Kanalschaltanforderungsnachricht über einen Außerbandkanal empfangen wird, wenn die Bestimmungseinheit (1865) die Nachrichten, die empfangen werden sollen, nicht empfängt; und eine Kanalschalteinheit (1870) zur Außerbandsignalgebung, die von dem ersten Frequenzkanal zu dem zweiten Frequenzkanal schaltet und eine Kanalschaltberichtsnachricht, die eine Antwort auf die Kanalschaltanforderungsnachricht ist, unter Verwendung der Außerbandsignalgebung überträgt, wenn bestimmt wird, dass die Kanalschaltanforderungsnachricht über den Außerbandkanal empfangen wird, wobei die Kanalschalteinheit (1860) zur impliziten Signalgebung, die eine implizite Signalgebung verwendet, ein Kanalschalten unter Verwendung der impliziten Signalgebung ausführt, wenn bestimmt wird, dass die Kanalschaltanforderungsnachricht über den Außerbandkanal nicht empfangen wird.

## Revendications

1. Procédé de commutation de canal mis en oeuvre par une station de base dans un système de radio cognitive, le procédé comportant les étapes ci-après consistant à : détecter un premier canal de fréquence actuellement indisponible parmi au moins un canal de fréquence de liaison montante / liaison descendante lequel est défini en tant qu'un canal de communication avec un équipement des locaux d'abonné (CPE) ; mettre en oeuvre une signalisation explicite dans laquelle un message de demande de commutation de canal demandant une commutation du premier canal de fréquence vers un deuxième canal de fréquence est transmis à l'équipement CPE, et attendre un message de rapport de commutation de canal lequel signale qu'une commutation de canal doit être mise en oeuvre en réponse au message de demande de commutation de canal devant être reçu à partir de l'équipement CPE ; suite à la réception du message de rapport de commutation de canal en provenance de l'équipement CPE, mettre en oeuvre une commutation de canal du premier canal de fréquence vers le deuxième canal de fréquence, en utilisant une signalisation explicite ; et lorsque le message de rapport de commutation de canal n'est pas reçu à partir de l'équipement CPE, utiliser une signalisation implicite, comportant une commutation de canal du premier canal de fréquence vers un troisième canal de fréquence lequel est prédéfini avec l'équipement CPE.

2. Procédé de commutation de canal selon la revendication 1, comportant en outre les étapes ci-après consistant à : lorsque le message de rapport de commutation de canal n'est pas reçu à partir de l'équipement CPE, déterminer si un canal hors bande est disponible pour la station de base ; lorsqu'il est déterminé que le canal hors bande est disponible, transmettre le message de demande de commutation de canal à l'équipement CPE par l'intermédiaire du canal hors bande ; et lorsqu'un message de rapport de commutation de canal, lequel représente une réponse au message de demande de commutation de canal transmis par l'intermédiaire du canal hors bande, est reçu à partir de l'équipement CPE, mettre en oeuvre une commutation de canal du premier canal de fréquence vers le deuxième canal de fréquence, en utilisant une signalisation hors bande, dans lequel l'étape de mise en oeuvre de la commutation de canal en utilisant une signalisation implicite comporte l'étape consistant à commuter du premier canal de fréquence au troisième canal de fréquence, lorsqu'il est déterminé que le canal hors bande n'est pas disponible ou lorsque le message de rapport de commutation de canal, lequel représente une réponse au message de demande de commutation de canal transmis par l'intermédiaire du canal hors bande, n'est pas reçu à partir de l'équipement CPE.

3. Procédé de commutation de canal selon la revendication 1, dans lequel le canal de fréquence de liaison montante / liaison descendante entre la station de base et l'équipement CPE utilise un système de duplexage par répartition en fréquence, et l'étape de détection du premier canal de fréquence comporte les étapes ci-après consistant à : exploiter un temporisateur T1 lorsque le résultat d'une recherche de canal révèle qu'un utilisateur en cours accède au canal de fréquence de liaison descendante, exploiter un temporisateur T2 lorsque le résultat de la recherche de canal révèle que l'utilisateur en cours accède au canal de fréquence de liaison montante, et exploiter un temporisateur T3 lorsque le résultat de la recherche de canal révèle que l'utilisateur en cours n'accède pas aux canaux de fréquence de liaison montante et de liaison descendante ; et détecter le premier canal de fréquence, selon qu'un message de rapport de recherche de canal, lequel est transmis à partir de l'équipement CPE en réponse à une demande de recherche de canal en provenance de la station de base, est reçu, détecter le résultat d'une recherche de canal mise en oeuvre par l'équipement CPE, lequel est inclus dans le message de rapport de recherche de canal reçu, selon qu'un message de rapport automatique, lequel est transmis en continu de l'équipement CPE à la station de base, est reçu, et détecter le résultat de la recherche de canal mise en oeuvre par la station de base.

4. Procédé de commutation de canal selon la revendication 3, dans lequel l'étape de détection du premier canal de fréquence déterminant le canal de fréquence de liaison descendante en tant que le premier canal de fréquence, lorsque le message de rapport de recherche de canal est reçu et lorsqu'il est déterminé que l'utilisateur en cours accède au canal de fréquence de liaison descendante sur la base du résultat de la recherche de canal de la station de base et du résultat de la recherche de canal de l'équipement CPE, lequel est inclus dans le message de rapport de recherche de canal reçu, ou lorsque le message de rapport de recherche de canal n'est pas reçu et que le message de rapport automatique est reçu, et l'étape de mise en oeuvre de la commutation de canal en utilisant une signalisation implicite, comportent l'étape consistant à commuter du premier canal de fréquence vers un troisième canal de fréquence, lequel est prédéfini avec l'équipement CPE, lorsque le message de rapport de commutation de canal n'est pas reçu à partir de l'équipement CPE jusqu'à une fin de temporisation.

5. Procédé de commutation de canal selon la revendication 3, dans lequel l'étape de détection du premier canal de fréquence consiste à détecter le canal de fréquence de liaison montante en tant que le premier canal de fréquence lorsqu'à la fois le message de rapport de recherche de canal et le message de rapport automatique sont reçus, et l'étape de mise en oeuvre de la commutation de canal en utilisant une signalisation implicite comporte l'étape consistant à commuter du premier canal de fréquence vers un troisième canal de fréquence, lequel est prédéfini avec l'équipement CPE, lorsque le message de rapport de commutation de canal n'est pas reçu à partir de l'équipement CPE jusqu'à une fin de temporisation du temporisateur T2.

6. Procédé de commutation de canal selon la revendication 3, dans lequel l'étape de détection du premier canal de fréquence comporte l'étape consistant à déterminer le canal de fréquence de liaison montante en tant que le premier canal de fréquence lorsqu'à la fois le message de rapport de recherche de canal et le message de rapport automatique sont reçus, et l'étape de mise en oeuvre de la commutation de canal en utilisant une signalisation implicite comporte l'étape consistant à commuter du premier canal de fréquence vers un troisième canal de fréquence, lequel est prédéfini avec l'équipement CPE, lorsque le message de rapport de commutation de canal n'est pas reçu à partir de l'équipement CPE jusqu'à une fin de temporisation du temporisateur T2.

7. Procédé de commutation de canal selon la revendication 6, comportant en outre l'étape consistant à, lorsque la communication n'est pas rétablie avec l'équipement CPE avant une fin de temporisation du temporisateur T3 bien que le premier canal de fréquence soit commuté vers le troisième canal de fréquence prédéfini, commuter un canal de fréquence de liaison montante / liaison descendante en cours vers un canal de fréquence de liaison montante / liaison descendante, lequel est prédéfini avec l'équipement CPE, après une période silencieuse utilisée dans le cadre d'une recherche de canal.

8. Procédé de commutation de canal selon la revendication 1, dans lequel le canal de fréquence de liaison montante / liaison descendante entre la station de base et l'équipement CPE utilise un système de duplexage par répartition dans le temps, et dans lequel l'étape de détection du premier canal de fréquence consiste à mettre en oeuvre une recherche de canal dans laquelle un temporisateur T1 fonctionne lorsque le résultat d'une recherche de canal révèle qu'un utilisateur en cours accède au canal de fréquence de liaison montante / liaison descendante, et un temporisateur T2 fonctionne lorsque le résultat de la recherche de canal révèle que l'utilisateur en cours n'accède pas au canal de fréquence de liaison montante / liaison descendante, et à détecter le premier canal de fréquence selon qu'un message de rapport de recherche de canal que l'équipement CPE transmet en réponse à une demande de recherche de canal en provenance de la station de base, est reçu, le résultat d'une recherche de canal mise en oeuvre par l'équipement CPE, qui est inclus dans le message de rapport de recherche de canal reçu, et le résultat de la recherche de canal mise en oeuvre par la station de base.

9. Procédé de commutation de canal selon la revendication 8, dans lequel l'étape de détection du premier canal de fréquence comporte l'étape consistant à déterminer le canal de fréquence de liaison montante / liaison descendante en cours en tant que le premier canal de fréquence lorsqu'un accès de l'utilisateur en cours n'est pas détecté au cours de la recherche de canal, ou lorsque le message de rapport de recherche de canal n'est pas reçu.

10. Procédé de commutation de canal selon la revendication 8, dans lequel l'étape de mise en oeuvre de la commutation de canal en utilisant une signalisation implicite comporte l'étape consistant à commuter du premier canal de fréquence vers un troisième canal de fréquence, lequel est prédéfini avec l'équipement CPE, lorsque le message de rapport de commutation de canal n'est pas reçu avant une fin de temporisation du temporisateur T1 ou du temporisateur T2 à partir de l'équipement CPE.

11. Procédé de commutation de canal mis en oeuvre par un équipement des locaux d'abonné (CPE) dans un système de radio cognitive, le procédé comportant les étapes ci-après consistant à : mettre en oeuvre une commutation de canal en utilisant une signalisation explicite, dans laquelle, lors de la réception d'un message de demande de commutation de canal demandant une commutation d'un premier canal de fréquence actuellement indisponible à un deuxième canal de fréquence parmi au moins un canal de fréquence de liaison montante / liaison descendante, lequel est défini en tant qu'un canal de communication avec une station de base, un message de rapport de commutation de canal, signalant quelle commutation de canal doit être mise en oeuvre en réponse au message de demande de commutation de canal, est transmis à la station de base, et le premier canal de fréquence est commuté vers le deuxième canal de fréquence ; et mettre en oeuvre une commutation de canal en utilisant une signalisation implicite dans laquelle le premier canal de fréquence actuellement indisponible est détecté selon que des messages qui doivent être reçus, incluant le message de demande de commutation de canal, sont reçus, et le résultat d'une recherche de canal mise en oeuvre par l'équipement CPE ; et dans lequel le premier canal de fréquence détecté est commuté vers un troisième canal de fréquence, lequel est prédéfini avec la station de base.

12. Procédé de commutation de canal selon la revendication 11, comportant en outre les étapes ci-après consistant à, lorsque les messages qui doivent être reçus ne sont pas reçus, déterminer si le message de demande de commutation de canal est reçu par l'intermédiaire d'un canal hors bande, et mettre en oeuvre une commutation de canal en utilisant une signalisation hors bande, dans laquelle le premier canal de fréquence est commuté vers le deuxième canal de fréquence, et un message de rapport de commutation de canal, lequel représente une réponse au message de demande de commutation de canal, est transmis lorsqu'il est déterminé que le message de demande de commutation de canal est reçu par l'intermédiaire du canal hors bande, dans lequel la commutation de canal en utilisant une signalisation implicite est mise en oeuvre lorsqu'il est déterminé que le message de demande de commutation de canal n'est pas reçu par l'intermédiaire du canal hors bande.

13. Procédé de commutation de canal selon la revendication 11, dans lequel le canal de fréquence de liaison montante / liaison descendante entre la station de base et l'équipement CPE utilise un système de duplexage par répartition en fréquence, le procédé de commutation de canal comportant en outre l'étape consistant à mettre en oeuvre une recherche de canal dans laquelle un temporisateur T4 fonctionne lorsque le résultat d'une recherche de canal révèle qu'un utilisateur en cours accède au canal de fréquence de liaison descendante, un temporisateur T5 fonctionne lorsque le résultat de la recherche de canal révèle que l'utilisateur en cours accède au canal de fréquence de liaison montante, et un temporisateur T6 fonctionne lorsque le résultat de la recherche de canal révèle que l'utilisateur en cours n'accède pas aux canaux de fréquence de liaison montante et de liaison descendante, dans lequel l'étape consistant à commuter un canal en utilisant une signalisation implicite comporte l'étape consistant à déterminer le canal de fréquence de liaison descendante en tant que le premier canal de fréquence, et l'étape consistant à commuter du premier canal de fréquence vers un troisième canal de fréquence, lequel est prédéfini avec la station de base, lorsqu'il est déterminé, au cours de la recherche de canal, que l'utilisateur en cours n'accède pas au canal de fréquence de liaison montante, et qu'un message de protocole MAP contenant des informations connexes à un canal de fréquence affecté à l'équipement CPE et le message de demande de commutation de canal ne sont pas reçus avant une fin de temporisation du temporisateur T4 ou du temporisateur T6.

14. Procédé de commutation de canal selon la revendication 11, dans lequel le canal de fréquence de liaison montante / liaison descendante entre la station de base et l'équipement CPE utilise un système de duplexage par répartition dans le temps, le procédé de commutation de canal comportant en outre l'étape consistant à mettre en oeuvre une recherche de canal dans laquelle un temporisateur T4 fonctionne lorsque le résultat de la recherche de canal révèle qu'un utilisateur en cours accède au canal de fréquence de liaison descendante, un temporisateur T5 fonctionne lorsque le résultat de la recherche de canal révèle que l'utilisateur en cours accède au canal de fréquence de liaison montante, et un temporisateur T6 fonctionne lorsque le résultat de la recherche de canal révèle que l'utilisateur en cours n'accède pas aux canaux de fréquence de liaison montante et de liaison descendante, dans lequel l'étape consistant à commuter un canal en utilisant une signalisation implicite comporte l'étape consistant à déterminer le canal de fréquence de liaison montante en tant que le premier canal de fréquence et l'étape consistant à commuter du premier canal de fréquence vers un troisième canal de fréquence, lequel est prédéfini avec la station de base, lorsqu'il est déterminé, au cours de la recherche de canal, que l'utilisateur en cours accède au canal de fréquence de liaison montante, et qu'un message de protocole MAP contenant des informations connexes à un canal de fréquence affecté à l'équipement CPE et le message de demande de commutation de canal ne sont pas reçus avant une fin de temporisation du temporisateur T5.

15. Procédé de commutation de canal selon la revendication 14, comportant en outre l'étape consistant à, lorsque la communication n'est pas rétablie avec la station de base avant une fin de temporisation du temporisateur T6 bien que le premier canal de fréquence soit commuté vers le troisième canal de fréquence prédéfini, commuter un canal de fréquence de liaison montante / liaison descendante en cours vers un canal de fréquence de liaison montante / liaison descendante, lequel est prédéfini avec l'équipement CPE, après une période silencieuse utilisée dans le cadre d'une recherche de canal.

16. Procédé de commutation de canal selon la revendication 11, dans lequel le canal de fréquence de liaison montante / liaison descendante entre la station de base et l'équipement CPE utilise un système de duplexage par répartition dans le temps, le procédé de commutation de canal comportant en outre l'étape consistant à mettre en oeuvre une recherche de canal dans laquelle un temporisateur T3 fonctionne lorsque le résultat de la recherche de canal révèle qu'un utilisateur en cours accède au canal de fréquence de liaison montante / liaison descendante, et un temporisateur T4 fonctionne lorsque le résultat de la recherche de canal révèle que l'utilisateur en cours n'accède pas au canal de fréquence de liaison montante / liaison descendante, dans lequel l'étape consistant à commuter un canal en utilisant une signalisation implicite comporte l'étape consistant à commuter du canal de fréquence de liaison montante / liaison descendante vers un canal de fréquence, lequel est prédéfini avec la station de base, lorsque le message de demande de commutation de canal n'est pas reçu avant une fin de temporisation du temporisateur T3 ou du temporisateur T4, s'il est déterminé, au cours de la recherche de canal, que l'utilisateur en cours n'accède pas au canal de fréquence de liaison montante / liaison descendante, mais qu'un message de protocole MAP contenant des informations connexes à un canal de fréquence affecté à l'équipement CPE n'est pas reçu, ou que l'utilisateur en cours accède au canal de fréquence de liaison montante / liaison descendante.

17. Appareil de commutation de canal inclus dans une station de base d'un système de radio cognitive, l'appareil **(1800)** comportant une unité de détection **(1805)** apte à détecter un premier canal de fréquence actuellement indisponible parmi au moins un canal de fréquence de liaison montante / liaison descendante, lequel est défini en tant qu'un canal de communication avec un équipement des locaux d'abonné (CPE) ; une unité de signalisation explicite **(1810)** apte à transmettre un message de demande de commutation de canal demandant une commutation du premier canal de fréquence vers un deuxième canal de fréquence, à l'équipement CPE, et à attendre de recevoir, en provenance de l'équipement CPE, un message de rapport de commutation de canal lequel signale qu'une commutation de canal doit être mise en oeuvre en réponse au message de demande de commutation de canal ; une unité de commutation de canal par signalisation explicite **(1815)** apte à commuter du premier canal de fréquence vers le deuxième canal de fréquence, en utilisant une signalisation explicite, lors de la réception du message de rapport de commutation de canal en provenance de l'équipement CPE, et une unité de commutation de canal par signalisation implicite **(1820)** apte à commuter du premier canal de fréquence vers un troisième canal de fréquence, lequel est prédéfini avec l'équipement CPE, lorsque l'unité de commutation de canal par signalisation implicite **(1815)** ne reçoit pas le message de rapport de commutation de canal en provenance de l'équipement CPE.

18. Appareil de commutation de canal selon la revendication 17, comportant en outre : une unité de détermination **(1825)** déterminant si un canal hors bande est disponible pour la station de base lorsque l'unité de détermination ne reçoit pas le message de rapport de commutation de canal en provenance de l'équipement CPE ; une unité de transmission de message de demande de commutation de canal **(1830)** transmettant le message de demande de commutation de canal à l'équipement CPE par l'intermédiaire d'une signalisation hors bande, lorsqu'il est déterminé que le canal hors bande est disponible ; et une unité de commutation de canal par signalisation hors bande **(1835)** commutant du premier canal de fréquence vers le deuxième canal de fréquence en utilisant une signalisation hors bande, lors de la réception d'un message de rapport de commutation de canal, lequel représente une réponse au message de demande de commutation de canal, transmis par l'intermédiaire du canal hors bande à partir de l'équipement CPE, dans lequel l'unité de commutation de canal par signalisation implicite **(1820),** en utilisant une signalisation implicite, commute du premier canal de fréquence vers le troisième canal de fréquence, lorsque l'unité de détermination **(1825)** détermine que le canal hors bande n'est pas disponible ou lorsque le message de rapport de commutation de canal, lequel représente une réponse au message de demande de commutation de canal transmis par l'intermédiaire du canal hors bande, n'est pas reçu à partir de l'équipement CPE.

19. Appareil de commutation de canal inclus dans un équipement des locaux d'abonné (CPE) d'un système de radio cognitive, l'appareil **(1850)** comportant une unité de commutation de canal par signalisation explicite **(1855)** apte à transmettre, à une station de base, un message de rapport de commutation de canal lequel signale qu'une commutation de canal doit être mise en oeuvre en réponse à un message de demande de commutation de canal, et apte à commuter d'un premier canal de fréquence vers un deuxième canal de fréquence en utilisant une signalisation explicite, lors de la réception du message de demande de commutation de canal demandant une commutation du premier canal de fréquence, lequel est actuellement indisponible, vers le deuxième canal de fréquence, parmi au moins un canal de fréquence de liaison montante / liaison descendante, lequel est défini en tant qu'un canal de communication, avec la station de base ; et une unité de commutation de canal par signalisation implicite **(1860)** apte à détecter le canal de fréquence actuellement indisponible, selon que des messages qui doivent être reçus, incluant le message de demande de commutation de canal, sont reçus, et selon le résultat d'une recherche de canal mise en oeuvre par l'équipement CPE, et à commuter du premier canal de fréquence détecté vers un troisième canal de fréquence, lequel est prédéfini avec la station de base.

20. Appareil selon la revendication 19, comportant en outre une unité de détermination **(1865)** déterminant si le message de demande de commutation de canal est reçu par l'intermédiaire d'un canal hors bande lorsque l'unité de détermination **(1865)** ne reçoit pas les messages qui doivent être reçus ; et une unité de commutation de canal par signalisation hors bande **(1870)** commutant du premier canal de fréquence vers le deuxième canal de fréquence, et transmettant un message de rapport de commutation de canal, lequel représente une réponse au message de demande de commutation de canal, en utilisant une signalisation hors bande, lorsqu'il est déterminé que le message de demande de commutation de canal est reçu par l'intermédiaire du canal hors bande, dans lequel l'unité de commutation de canal par signalisation implicite **(1860),** utilisant une signalisation implicite, met en oeuvre une commutation de canal, en utilisant une signalisation implicite, lorsqu'il est déterminé que le message de demande de commutation de canal n'est pas reçu par l'intermédiaire du canal hors bande.
